(19) Europäisches Patentamt
European Patent Office
Office européen des brevets

(11) **EP 3 540 403 B1**

(12) **EUROPÄISCHE PATENTSCHRIFT**

(45) Veröffentlichungstag und Bekanntmachung des Hinweises auf die Patenterteilung:
**09.08.2023   Patentblatt 2023/32**

(21) Anmeldenummer: **18189724.0**

(22) Anmeldetag: **20.08.2018**

(51) Internationale Patentklassifikation (IPC):
**G01M 15/02** *(2006.01)*       **G01M 17/06** *(2006.01)*

(52) Gemeinsame Patentklassifikation (CPC):
**G01M 13/00**

(54) **VERFAHREN ZUR DURCHFÜHRUNG EINES PRÜFLAUFS EINES PRÜFLINGS**

METHOD FOR CARRYING OUT A TEST OF A DEVICE UNDER TEST

PROCÉDÉ DE MISE EN OEUVRE D'UN ESSAI D'UN SPÉCIMEN D'ESSAI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.03.2018   AT 502182018**

(43) Veröffentlichungstag der Anmeldung:
**18.09.2019   Patentblatt 2019/38**

(73) Patentinhaber: **AVL List GmbH**
**8020 Graz (AT)**

(72) Erfinder:
• **Bunel, Boris**
  **8042 Graz (AT)**

• **Karabiyik, Egemen**
  **34920 Isanbul (TR)**
• **Montini, Matteo**
  **8010 Graz (AT)**
• **Vidmar, Khai**
  **8222 St. Johann (AT)**

(74) Vertreter: **Hahner, Ralph et al**
**Wallinger Ricker Schlotter Tostmann**
**Patent- und Rechtsanwälte Partnerschaft mbB**
**Zweibrückenstraße 5-7**
**80331 München (DE)**

(56) Entgegenhaltungen:
**WO-A1-2017/080999       DE-A1-102012 018 359**
**DE-A1-102017 107 271    US-A1- 2012 330 479**

**Beschreibung**

Die Erfindung betrifft ein Verfahren sowie ein System zum Erzeugen eines Prüflaufs, insbesondere Belastungsablaufs oder eines Geschwindigkeitsablaufs, insbesondere für ein Fahrzeug, wobei sich der Prüflauf zum Nachbilden eines, insbesondere realen, Betriebs wenigstens eines Prüflings, insbesondere des Fahrzeugs und/oder eines Antriebsstrangs des Fahrzeugs und/oder einer Fahrzeugkomponente des Fahrzeugs, eignet. Die Erfindung betrifft des Weiteren ein Verfahren zum Testen eines Prüflings, welches auf das computer-gestützte Verfahren zurückgreift und ein Verfahren sowie ein System zur Durchführung eines Prüflaufs eines Prüflings, insbesondere eines Fahrzeugs, eines Antriebsstrangs oder einer Fahrzeugkomponente.

Die strenger werdenden, da sinkenden Emissionsgrenzwerte, beispielsweise für Partikelanzahl ("Particle number" - PN) und NOx-Werte, stellen zunehmend höhere Anforderungen an die Entwicklung von Antrieben für Kraftfahrzeuge. Dabei wird neben der Angleichung lokaler Zertifizierungsverfahren durch Einführung von WLTP ("Worldwide Harmonized Light-Duty Vehicles Test Procedure") auch die Nachweispflicht über die Einhaltung der Grenzwerte im realen Fahrbetrieb ("Real Driving Emissions" - RDE) gesetzlich festgelegt.

Mit der Einführung der Real Driving Emissions (RDE)-Gesetzgebung müssen Kraftfahrzeuge seit September 2017 für die Typprüfung in der Europäischen Union neben einem Prüfzyklus bzw. Prüflauf im Labor (WLTP, WLTC) auch die Einhaltung von Emissionsgrenzwerten auf der Straße unter realen Fahrbedingungen nachweisen.

Mit RDE wird anstatt Abläufen in reproduzierbaren Prüfstandsumgebungen das im Wesentlichen beliebige Fahren unter im Wesentlichen beliebigen Bedingungen reglementiert. Die Emissionsrobustheit wird damit über die Zyklenanteile der Zertifizierung hinaus kundenrelevant bestmöglich sichergestellt.

Die Kontrolle der Übereinstimmung der Produktion erfolgt einerseits mittels Stichproben von fabrikneuen Fahrzeugen. Sie stellen sicher, dass ihre Emissionswerte den bei der Typgenehmigung gemessenen entsprechen. Andererseits werden Prüfungen der Übereinstimmung im Betrieb aber auch an Fahrzeugen durchgeführt, die bereits eine gewisse Laufleistung aufweisen oder seit einigen Jahren in Kundenhand in Betrieb sind.

Daher sollte vorzugsweise sichergestellt werden, dass eine während der Entwicklung bzw. Typgenehmigung erreichte Konformität auch im Rahmen der seitens der EU erdachten RDE-Grenzwerte im realen Fahrbetrieb in allen dem Konsumenten möglichen Fahrsituationen gewährleistet ist. Ziel ist es letztendlich, Emissionsgrenzwerte über einen genau vordefinierten Zyklus unter vordefinierten Randbedingungen hinaus robust auf realen Prüffahrten auf unbekannten Strecken mit bewusst grob abgesteckten Randbedingungen einzuhalten.

Ein typisches RDE-Testprogramm mit mobilen Messgeräten (Portable Emission Measurement System, kurz: PEMS) besteht dabei aus einer eine möglichst große Bandbreite abdeckenden Selektion von Prüffahrten auf unterschiedlichen Strecken mit verschiedenen Fahrern. Dabei muss eine Fahrstrecke in realer Umgebung zurückgelegt werden, die nach aktueller gesetzlicher Regelung unter Berücksichtigung einer Toleranzbreite zu etwa 34 % aus Stadtbetrieb, 33 % Landstraßenbetrieb und 33 % Autobahnbetrieb bestehen muss.

Um das zu erreichen, entwickeln Fahrzeughersteller und -entwickler Testzyklen im Real- und Prüfstandsumfeld, die sich möglichst genau an realen und entwicklungskritischen Fahrsituationen und -szenarien orientieren und festlegen, mit welchem Geschwindigkeitsprofil ein Fahrzeug bei der Ermittlung von Emissionen betrieben wird bzw. der Fahrbetrieb simuliert wird. Allerdings kann dadurch nicht garantiert werden, dass sämtliche im Alltag auftretenden emissionsrelevanten Fahrsituationen abgedeckt sind.

Die Straße als Prüfumgebung bietet mit ihrer Vielzahl an Einflüssen zwar die notwendige stochastische Grundlage, um sicherzustellen, dass Kraftfahrzeuge auch im Kundenbetrieb die geforderten Emissionsziele einhalten. Allerdings ist es durch die schwer kontrollierbaren Einflüsse nahezu unmöglich, bei realen Prüffahrten auf der Straße zwei Messungen mit vergleichbaren Bedingungen durchzuführen. Aus diesem Grund lassen sich die Auswirkungen von Modifikationen an Antrieb oder Kraftfahrzeug nicht gezielt mit einem Basiszustand vergleichen. Dies macht Aussagen über die Wirksamkeit von Modifikationen schwierig. Daher ist die Straße als Entwicklungsumgebung nur bedingt im Sinne finaler Breitenabsicherung geeignet.

Prüfstandtests sind hingegen reproduzierbar und Einflüsse oder Parameter können bei Bedarf gezielt konstant gehalten werden. Auf diese Weise werden Auswirkungen von Einflüssen und von deren Modifikationen transparent und wiederholbar. Zudem können Prüfstandversuche mit aufwändigerer Messinstrumentierung durchgeführt werden, was zu aussagekräftigeren Messergebnissen führt.

Das Dokument EP 1 672 348 A1 betrifft ein Verfahren zum Betreiben eines Kraftfahrzeugs auf einem Rollenprüfstand, wobei das Kraftfahrzeug mit einer Motorsteuerung ausgestattet ist, mit der eine elektronisch geregelte Frischluft- bzw. Frischluftgemisch-Beimessung und ein Automatikgetriebe oder ein elektronisch betätigbares Getriebe steuerbar ist.

Des Weiteren sind aus dem Stand der Technik weitere Prüfstände bekannt, um ein Kraftfahrzeug oder Komponenten eines Kraftfahrzeugs zu testen, beispielsweise Antriebsstrangprüfstand, Getriebeprüfstand etc.

Zudem ist es möglich, ein Kraftfahrzeug oder Komponenten des Kraftfahrzeugs teilweise oder auch vollständig modellbasiert zu testen. Hierfür wird ein Modell des zu testenden Kraftfahrzeugs oder der zu testenden Komponente oder Komponenten erstellt und der Fahrbetrieb anschließend anhand dieser Modelle und eines Prüfzyklus bzw. Prüflaufs simuliert.

In dem Prüflauf, auch Fahrzyklus oder Prüfzyklus genannt, wird dabei festgelegt, unter welchen Bedingungen mit welchem Geschwindigkeitsprofil, das heißt einem zeitlichen Geschwindigkeitsablauf, oder mit welchem Belastungsablauf, vorzugsweise definiert durch Drehzahl und Drehmoment am Antriebsstrang, ein Kraftfahrzeug betrieben wird.

Die DE 10 2017 107 271 A1 beschreibt ein Verfahren zur Ermittlung eines Leitfahrzyklus für Fahrversuche zur Ermittlung von Abgasemissionen von Kraftfahrzeugen. Dabei werden ausgehend von parametrischen Beschreibungen realer Fahrsituationen die Emissionen im gesamten Variationsbereich der Parameter simuliert und die maximal auftretenden Abgasemissionen ermittelt. Die dabei geltenden Parameter, insbesondere die Geschwindigkeitswerte, werden dann für die Durchführung einer Fahrzyklus-Emissionssimulation verwendet, um darin jedenfalls auch die "Maximal"-Emissionsfälle abzubilden. Während damit zwar während der Entwicklung die Konformität bei der Zertifizierung abgeprüft wird, bleibt eine Unsicherheit bezüglich der Serienkonformität.

Das Dokument WO 2017/080999 A1 offenbart ein Verfahren zum Erzeugen eines Prüflaufs gemäß dem Stand der Technik.

Es ist eine Aufgabe der Erfindung, eine verbesserte Prüfung von Kraftfahrzeugen oder deren Komponenten zu ermöglichen. Vorzugsweise ist es eine Aufgabe der Erfindung, eine unter den Bedingungen der RDE-Gesetzgebung geeignete, verbesserte Prüfung bereitzustellen. Weiter vorzugsweise ist es eine Aufgabe der Erfindung, ein Verfahren bereit zu stellen, bei dem die Konformität eines Prüflings mit gesetzlichen Regelungen im Serienbetrieb bzw. während der gesamten Betriebszeit sichergestellt ist.

Diese Aufgabe wird mit den eingangs erwähnten Verfahren und Systemen, welche durch die unabhängigen Ansprüche definiert werden, gelöst. Vorteilhafte Ausgestaltungen werden in den Unteransprüchen beansprucht.

Ein erster Aspekt der Erfindung betrifft ein, insbesondere computer-gestütztes, Verfahren zum Erzeugen eines Prüflaufs, insbesondere eines Belastungsablaufs oder eines Geschwindigkeitsablaufs, für ein Fahrzeug, wobei sich der Prüflauf zum Nachbilden eines, insbesondere realen, Betriebs wenigstens eines Prüflings, insbesondere des Fahrzeugs und/oder des Antriebsstrangs des Fahrzeugs und/oder einer Fahrzeugkomponente des Fahrzeugs, eignet, vorzugsweise folgende Arbeitsschritte aufweisend:

Bereitstellen eines Datensatzes, welcher Betriebsdaten zumindest eines Nutzungszyklus eine Fahrzeugs oder einer Vielzahl an Nutzungszyklen von Fahrzeugen aufweist;

Normieren der Betriebsdaten des Nutzungszyklus oder der Nutzungszyklen, wobei beim Normieren Betriebsdaten zu spezifischen Betriebsdaten transformiert werden, um verschiedene Nutzungszyklen und/oder verschiedene Fahrzeugtypen vergleichbar zu machen;

Prüfen, an welchen Stellen des Nutzungszyklus oder der Nutzungszyklen Emissions-relevante Ereignisse auftreten;

Zuordnen eines jeweils an diesen Stellen vorliegenden Fahrmanövers zu den Emissions-relevanten Ereignissen;

Erzeugen des Prüflaufs des Fahrzeugs auf der Grundlage der zugeordneten Fahrmanöver; und

Ausgeben des Prüflaufs des Fahrzeugs.

Ein zweiter Aspekt der Erfindung betrifft ein Verfahren zum Erzeugen eines Prüflaufs, insbesondere eines Belastungsablaufs und/oder eines Geschwindigkeitsablaufs, wobei sich der Prüflauf zum Nachbilden eines, insbesondere realen, Betriebs wenigstens eines Prüflings, insbesondere eines Fahrzeugs und/oder eines Antriebsstrangs und/oder einer Fahrzeugkomponente, eignet, folgende Arbeitsschritte aufweisend:

Ermitteln eines Datensatzes, welcher Betriebsdaten zumindest eines Nutzungszyklus eines Fahrzeugs oder einer Vielzahl an Nutzungszyklen von Fahrzeugen aufweist;

Normieren der Betriebsdaten des Nutzungszyklus oder der Nutzungszyklen, wobei beim Normieren Betriebsdaten zu spezifischen Betriebsdaten transformiert werden;

Prüfen des Nutzungszyklus oder der Nutzungszyklen auf vordefinierte Fahrmanöver, welchen vorzugsweise Emissions-relevanten Ereignissen zugeordnet sind; Erzeugen des Prüflaufs auf der Grundlage der Fahrmanöver, welche Emissions-relevanten Ereignissen zugeordnet sind; und

Ausgeben des Prüflaufs.

Ein Prüflauf im Sinne der Erfindung ist vorzugsweise ein zu erzeugender Testzyklus. Vorzugsweise wird der Prüflauf für ein vorgegebenes Fahrzeug als reiner Geschwindigkeitsablauf durch eine Geschwindigkeit in jedem Segment oder Zeitpunkt des Prüflaufs definiert. Weiter vorzugsweise wird der Prüflauf als Belastungsablauf durch eine Geschwindigkeit und eine Fahrbahnsteigung in jedem Segment oder Zeitpunkt des Prüflaufs oder eine Drehzahl und ein Drehmoment in jedem Segment oder Zeitpunkt des Prüflaufs definiert. Vorzugsweise berücksichtigt der Prüflauf, insbesondere alle, Fahrwiderstände, welche auf ein Fahrzeug im Betrieb wirken, insbesondere einen Luftwiderstand und/oder einen Rollwiderstand. Je nach Prüfstands-Art werden vorzugsweise Fahrzeugdaten berücksichtigt. Beim Rollenprüfstand, Antriebsstrangprüfstand und Motorenprüfstand sollte vorzugsweise ein Fahrzeuggewicht berücksichtigt werden. Beim Antriebsstrangprüfstand und Motorenprüfstand sollte vorzugsweise zusätzlich eine Reifengröße und ein dynamischer Reifendurchmesser berücksichtigt werden. Beim Motorenprüfstand sollte vorzugsweise zusätzlich eine Übersetzung des Getriebes berücksichtigt werden.

Ein Fahrmanöver im Sinne der Erfindung ist vorzugsweise eine Abfolge von Fahrzuständen. Fahrmanöver können vorzugsweise eindeutig voneinander abgegrenzt werden, so dass aufeinanderfolgende Fahrmanöver nicht überlappen.

Ein Fahrzustand im Sinne der Erfindung ist vorzugsweise durch eine Wertekonstellation einer Mehrzahl an Betriebsparametern eines Fahrzeugs definiert.

Ein Ablauf im Sinne der Erfindung ist vorzugsweise eine zeitbasierte oder distanzbasierte Abfolge von Werten eines Parameters. Ein Ablauf im Sinne der Erfindung kann vorzugsweise auch als Profil bezeichnet werden.

Ein Ermitteln im Sinne der Erfindung ist vorzugsweise ein Einlesen, insbesondere aus einem Datenspeicher. Vorzugsweise bedeutet Ermitteln auch ein Durchsuchen eines bereitgestellten Datensatzes oder auch ein Bereitstellen.

Ein Normieren im Sinne der Erfindung ist ein Transformieren von Betriebsdaten zu spezifischen Betriebsdaten. Beispielsweise berücksichtigt eine spezifische Leistung eines Fahrzeugs das Gewicht des Fahrzeugs, um unterschiedliche Fahrzeuge miteinander vergleichbar zu machen.

Ein Skalieren im Sinne der Erfindung ist vorzugsweise ein Transformieren von normierten Betriebsdaten zu absoluten Betriebsdaten für einen bestimmten, spezifischen Prüfling, wobei der Prüfling vorzugsweise ein bestimmtes Fahrzeug, ein Antriebsstrang des bestimmten Fahrzeugs oder eine andere Fahrzeugkomponente ist. Ein Skalieren berücksichtigt insbesondere über die spezifischen Eigenschaften eines Prüflings.

Ein Emissions-relevantes Ereignis im Sinne der Erfindung ist vorzugsweise ein Anstieg oder ein Spitzenwert in einem zeitlichen Ablauf einer bestimmten Emissionsart, insbesondere einer Mehrzahl von Emissionsarten. Emissionsarten sind zum Beispiel eine Partikelanzahl PN, Kohlenmonoxid-Ausstoß CO oder auch Stickoxid-Ausstoß $NO_x$.

Eine Eigenschaft im Sinne der Erfindung ist vorzugsweise aus der folgenden Gruppe ausgewählt: ein Leistungsgewicht bzw. Masse-Leistungs-Verhältnis, ein Roll- und/oder Luftwiderstandsparameter, eine Volllastleistungscharakteristik, ein Antriebsstrangkonzept, ein Übersetzungsverhältnis von Getriebe und/oder Differential, ein Abgasnachbehandlungskonzept, eine spezifische Informationen zu Motorbetriebszuständen, insbesondere Drehzahl, Last, spülender Ladungswechsel, Einspritzparameter, Lambdaparameter und vergleichbare Kenngrößen.

Ein realer Betrieb im Sinne der Erfindung ist vorzugsweise ein Straßenbetrieb, insbesondere durch einen Endkunden durchgeführt.

Die Erfindung basiert insbesondere auf dem Ansatz, einen Prüflauf aus Fahrmanövern zusammenzusetzen oder einen vordefinierten Prüflauf, insbesondere einen real gefahrenen Prüflauf, mit weiteren Fahrmanövern anzureichern und/oder Fahrmanöver des vordefinierten Prüflaufs gegen andere Fahrmanöver auszutauschen.

Die zum Erzeugen des Prüflaufs verwendeten Fahrmanöver sind dabei wenigstens teilweise Fahrmanöver, welche Emissions-relevanten Ereignissen entsprechen, auch Emissions-relevante Fahrmanöver genannt.

Durch das Zusammensetzen des Prüflaufs aus Emissions-relevanten Fahrmanövern oder das Anreichern eines vorgegebenen Prüflaufs durch Emissions-relevante Fahrmanöver kann sichergestellt werden, dass emissionsrelevante Vorgänge erkannt und im Prüflauf abgebildet werden. Dadurch wird verhindert, dass der Prüflauf die Bedingungen im realen Betrieb nur unzureichend abbildet und damit zwar während der Prüfung eine Konformität mit gesetzlichen Rahmenbedingungen ergibt, bei der Serienverwendung bzw. beim realen Betrieb des Prüflings diese Konformität aber nicht mehr gegeben ist.

Ein Vorliegen von Fahrmanövern wird vorzugsweise mittels einer Fahrmanöver-Datenbank festgestellt oder, falls diese in der Fahrmanöver-Datenbank noch nicht definiert sind, als neue Fahrmanöver definiert. Somit ist es möglich, eine Datenbank um neue, insbesondere Emissions-relevante, Manöver zu erweitern.

Vorzugsweise handelt es sich bei Prüflingsparametern bzw. Betriebsparametern, bei Parametern, welche ein Fahrmanöver definieren, um zumindest einen der folgenden Parameter:
Fahrzeuggeschwindigkeit, Pedalposition, Temperatur einer Abgasnachbehandlungskomponente, insbesondere durchschnittliche Temperatur, insbesondere SCR-Temperatur, insbesondere Vor-, Haupt-, Nach-, oder Heiz-Katalysatortemperatur, insbesondere Otto- oder Dieselpartikelfiltertemperatur, insbesondere NSC-Temperatur, Status Bremssteuerung, Status Kupplungssteuerung, Gang- oder Fahrmodusauswahl, Batterieladezustand , Lambda, zurückgelegte Distanz, Streckengradient, Umgebungstemperatur, Umgebungsdruck, Massenfluss vor und/oder in und/oder nach einer Abgasnachbehandlungskomponente, Drehmoment, Konvertierungsrate und/oder Sauerstoffspeicherfähigkeit einer Abgasnachbehandlungskomponente, Beladungszustand einer Abgasnachbehandlungskomponente.

Weitere Betriebsparameter bzw. Emissionsmesswerte sind zumindest einer der folgenden Parameter, welche vorzugsweise gemessen werden: Stickstoffoxid (NOx), Partikelzahl (PN), Kohlenstoffmonoxid (CO), Masse der gesamten Kohlenwasserstoffe (THC), Summe der Massen der gesamten Kohlenwasserstoffe und Stickoxide (THx + NOx).

Damit werden insbesondere die bei der Fahrzeugenwicklung relevanten Parameter bzw. Messwerte berücksichtigt.

Ein dritter Aspekt der Erfindung betrifft entsprechend ein System zum Erzeugen eines Prüflaufs, insbesondere eines Belastungsablaufs oder eines Geschwindigkeitsablaufs, für ein Fahrzeug, wobei sich der Prüflauf zum Nachbilden eines, insbesondere realen, Betriebs wenigstens eines Prüflings, insbesondere des Fahrzeugs, eines Antriebsstrangs des Fahrzeugs und/oder einer Fahrzeugkomponente des Fahrzeugs, eignet, aufweisend:

Eine Schnittstelle, eingerichtet zum Ermitteln eines Datensatzes, welcher Betriebsdaten zumindest eines Nutzungszyklus eines Fahrzeugs oder einer Vielzahl an Nutzungszyklen von Fahrzeugen aufweist;

Mittel zum Normieren der Betriebsdaten des Nutzungszyklus oder der Nutzungszyklen, um verschiedene Nutzungszyklen und/oder verschiedene Fahrzeugtypen vergleichbar zu machen;

Mittel zum Prüfen, an welchen Stellen des Nutzungszyklus oder der Nutzungszyklen Emissions-relevante Ereignisse auftreten;

Mittel zum Zuordnen eines jeweils an diesen Stellen vorliegenden Fahrmanövers zu den Emissions-relevanten Ereignissen;

Mittel zum Erzeugen des Prüflaufs des Fahrzeugs auf der Grundlage der zugeordneten Fahrmanöver; und

wobei die Schnittstelle des Weiteren eingerichtet ist, den Prüflauf des Fahrzeugs auszugeben und vorzugsweise mit einem Prüfstand oder einer Simulationsumgebung, insbesondere direkt, gekoppelt ist.

Ein vierter Aspekt der Erfindung betrifft entsprechend ein System zum Erzeugen eines Prüflaufs, insbesondere eines Belastungsablaufs und/oder eines Geschwindigkeitsablaufs, wobei sich der Prüflauf zum Nachbilden eines, insbesondere realen, Betriebs wenigstens eines Prüflings, insbesondere eines Fahrzeugs und/oder eines Antriebsstrangs und/oder einer Fahrzeugkomponente, eignet, aufweisend:

eine Schnittstelle, welche vorzugsweise direkt an eine Prüfumgebung koppelbar ist, zum Ermitteln eines Datensatzes, welcher Betriebsdaten zumindest eines Nutzungszyklus eines Fahrzeugs oder einer Vielzahl an Nutzungszyklen von Fahrzeugen aufweist, und zum Ausgeben des Prüflaufs;;

Mittel zum Normieren der Betriebsdaten des Nutzungszyklus oder der Nutzungszyklen;

Mittel zum Prüfen des Nutzungszyklus oder der Nutzungszyklen auf vordefinierte Fahrmanöver, welchen vorzugsweise Emissions-relevanten Ereignissen zugeordnet sind; und

Mittel zum Erzeugen des Prüflaufs auf der Grundlage der Fahrmanöver, welche Emissions-relevanten Ereignissen zugeordnet sind.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien, aufweisen. Das Programm kann derart beschaffen sein, dass es die hier beschriebenen Verfahren verkörpert bzw. auszuführen imstande ist, so dass die CPU die Schritte solcher Verfahren ausführen kann und damit insbesondere eine Hubkolbenmaschine steuern und/oder überwachen kann.

Ein fünfter Aspekt der Erfindung betrifft ein Verfahren zum Testen eines Prüflings, die folgenden Arbeitsschritte aufweisend:

Bereitstellen des Prüflings und/oder von Eigenschaften eines spezifischen Fahrzeugs, in dem der Prüfling angeordnet ist; und

Erzeugen eines Prüflaufs auf der Grundlage von normierten Fahrmanövern, welche vorzugsweise Emissions-relevanten Ereignissen entsprechen, insbesondere mittels eines Verfahrens zum Erzeugen eines Prüflaufs; und

Durchführen des Prüflaufs mit dem Prüfling.

Die auf diese Weise generierten Daten können eingesetzt werden, um ein Fahrzeug, beispielsweise in Bezug auf seine Emissions-Charakteristik, zu prüfen. Überschreitet ein Prüfling vorgegebene Grenzwerte, so kann dieser vorzugsweise in einem iterativen Optimierungsverfahren konstruktiv und/oder in seiner Steuerung angepasst werden, um die vorgegebenen Kriterien, insbesondere gesetzliche Vorgaben, zu erfüllen.

Ein sechster Aspekt der Erfindung betrifft ein Verfahren zur Durchführung eines Prüflaufs eines Prüflings, insbesondere eines Fahrzeugs, eines Antriebsstrangs oder einer Fahrzeugkomponente, wobei vorzugsweise der Prüflauf in Erfüllung gesetzlicher Rahmenbedingungen abläuft, folgende Arbeitsschritte aufweisend:

Ermitteln von Prüflingsparametern und Emissionsmesswerten aus bereits durchgeführten Prüfläufen;

Definieren von Prüflingsmanövern, gekennzeichnet durch Prüflingsparameter, die im ursächlichen Zusammenhang mit über definierten Grenzwerten liegenden Emissionswerten liegen;

Festlegen eines Prüflaufs unter zumindest teilweiser Verwendung der definierten Prüflingsmanöver; und

Durchführen des Prüflaufs.

Durch das Definieren von Prüflingsmanövern bzw. Fahrmanövern im Rahmen der vorliegenden Erfindung können auch neue, noch nicht bekannte bzw. in einer Datenbank abgelegte Fahrmanöver definiert werden.

Ein siebenter Aspekt der Erfindung ist ein entsprechendes System zur Durchführung eines Prüflaufs eines Prüflings, insbesondere eines Fahrzeugs, eines Antriebsstrangs oder einer Fahrzeugkomponente, wobei der Prüflauf vorzugsweise in Erfüllung gesetzlicher Rahmenbedingungen abläuft, aufweisend:

Mittel zum Ermitteln von Prüfungsparametern und Emissionswerten aus bereits durchgeführten Prüfläufen;

Mittel zum Definieren von Prüflingsmanövern, vorzugsweise gekennzeichnet durch Prüflingsparameter, die im ursächlichen Zusammenhang mit definierten Grenzwerten liegenden Emissionswerten stehen und/oder definierten, insbesondere gesetzlichen, Rahmenbedingungen zur Regelkonformität von Testbedingungen, welche eine Zyklus-Gültigkeit betreffen;

Mittel zum Festlegen eines Prüflaufs unter zumindest teilweiser Verwendung der definierten Prüflingsmanöver; und

einen Prüfstand oder eine Simulationsumgebung zum Durchführen des Prüflaufs.

In einer vorteilhaften Ausgestaltung weisen die Verfahren des Weiteren den folgenden Arbeitsschritt auf:

Klassifizieren der Fahrmanöver nach der im jeweiligen Fahrmanöver aufgetretenen Emission, insbesondere einem Emissionsanstieg gegenüber einem vorher im Nutzungszyklus aufgetretenen Fahrmanöver, und/oder nach Geschwindigkeits-Bins der Fahrzeuge während des jeweiligen Fahrzustands;

wobei das Erzeugen des Prüflaufs auf der Grundlage des Klassifizierens erfolgt, wobei vorzugsweise Fahrmanöver, bei welchen eine relativ hohe Emission, insbesondere ein relativ hoher Emissionsanstieg, im Vergleich zu anderen Fahrmanövern auftritt, bevorzugt zum Erzeugen des Prüflaufs herangezogen werden.

Durch das Klassifizieren der Fahrmanöver können jene Fahrmanöver identifiziert werden, welche besonders Emissions-relevant sind. Insbesondere beim Erzeugen eines maximal herausfordernden Prüflaufs, mit welchem beispielsweise eine Fahrzeugflottenkonformität abgeprüft werden kann, können auf diese Weise jene Fahrmanöver berücksichtigt werden, welche für die Konformität der einzelnen Fahrzeuge der Fahrzeugflotte besonders kritisch sind.

In einer weiteren vorteilhaften Ausgestaltung weist das Verfahren des Weiteren den folgenden Arbeitsschritt auf:

Auswerten eines Auftretens der Fahrmanöver, insbesondere mittels statistischer Methoden;

wobei eine Häufigkeit eines bestimmten Fahrmanövers in dem Prüflauf von einem Ergebnis des Auswertens abhängt, wobei vorzugsweise Fahrmanöver, welche relativ oft in den Nutzungszyklen auftreten, und/oder bei welchen eine relativ hohe Emission, insbesondere ein relativ hoher Emissionsanstieg, auftritt, eine erhöhte Häufigkeit in dem Prüflauf aufweisen.

Insbesondere beim Erzeugen eines RDE-Prüflaufs kann auf diese Weise sichergestellt werden, dass die Häufigkeit von Fahrmanövern in den Prüfläufen auch jenen im realen Betrieb entspricht. Dies führt zu realistischeren Ergebnissen in Bezug auf Emission bei Prüfläufen.

In einer weiteren vorteilhaften Ausgestaltung weisen die Verfahren des Weiteren den Arbeitsschritt auf:

Ermitteln von Eigenschaften eines spezifischen Prüflings oder Fahrzeugs, in welchem der Prüfling verbaut ist, insbesondere einer Fahrzeugmasse;

wobei das Erzeugen des Prüflaufs des Weiteren auf der Grundlage der Eigenschaften des spezifischen Prüflings oder Fahrzeugs erfolgt, wobei vorzugsweise die normierten Betriebsdaten beim Erzeugen des Prüflaufs auf den spezifischen Prüfling oder das spezifische Fahrzeug, in dem der Prüfling angeordnet ist, skaliert werden.

Durch das Berücksichtigen der Eigenschaften eines spezifischen Fahrzeugs können die normierten Betriebsdaten, insbesondere spezifische Betriebsdaten, auf die Verhältnisse des spezifischen Fahrzeugs angepasst bzw. transformiert werden. Ein Verhalten eines spezifischen Fahrzeugs kann auf diese Weise aus den normierten Betriebsdaten eines Fahrmanövers ermittelt werden. Vorzugsweise wird auch ein spezifischer Fahrbahnsteigungsablauf ermittelt, welchen das spezifische Fahrzeug während des Prüflaufs zurücklegt. Auch dies dient dazu, um die normierten Betriebsdaten auf einen spezifischen Fahrbahnverlauf anzupassen bzw. zu transformieren.

In einer weiteren vorteilhaften Ausgestaltung weist das Verfahren des Weiteren den folgenden Arbeitsschritt auf:

Prüfen, an welchen Stellen der Nutzungszyklen Benutzer-Aktionen, insbesondere eine Betätigung eines Gaspedals der Fahrzeuge, auftreten;

wobei solche Fahrmanöver wenigstens teilweise zum Erzeugen des Prüflaufs herangezogen werden, welche im Zusammenhang mit Benutzer-Aktionen stehen weil diese besonders relevant für die Emissionscharakteristik eines Fahrzeugs sein können.

In einer weiteren vorteilhaften Ausgestaltung weist das erfindungsgemäße Verfahren des Weiteren folgenden Arbeitsschritt auf:

Bereitstellen eines vordefinierten Prüflaufs, welcher insbesondere auf einem realen Nutzungszyklus eines Fahrzeugs, insbesondere des Prüflings oder des spezifischen Fahrzeugs, beruht;

wobei beim Erzeugen des Prüflaufs der vordefinierte Prüflauf als Grundlage dient, welcher durch Einfügen von Fahrmanövern, die Emissions-relevanten Ereignissen zugeordnet sind, angepasst wird; und/oder

wobei beim Erzeugen des Prüflaufs der vordefinierte Prüflauf als Grundlage dient, welcher durch Verändern der Umgebung in dem vordefinierten Prüflauf, insbesondere einer Fahrbahnsteigung und/oder von Umweltbedingungen, angepasst wird.

Der Einsatz eines vordefinierten Prüflaufs hat den Vorteil, dass Emissionscharakteristika von Fahrzeugen in diesem Prüflauf bekannt sind. Auch ist bekannt, ob ein solcher Prüflauf vordefinierte Kriterien für eine RDE-Zyklus-Gültigkeit einhält. Vorzugsweise können auch bestehende RDE-Betriebsdaten als Referenz verwendet werden. Auf der Grundlage eines solchen vordefinierten Prüflaufs können dann in einfacher Weise abgewandelte Prüfläufe erzeugt werden, welche ebenfalls eine Gültigkeit in Bezug auf vordefinierte Kriterien aufweisen.

In einer weiteren vorteilhaften Ausgestaltung der Verfahren wird der Prüflauf beim Erzeugen aus Fahrmanövern, die Emissions-relevanten Ereignissen zugeordnet sind, und anderen Fahrmanövern, welche vorzugsweise in den Nutzungszyklen identifiziert wurden, zusammengesetzt.

Auf diese Weise können völlig neue Prüfläufe erzeugt werden. Dies macht das erfindungsgemäße Verfahren besonders flexibel.

In einer weiteren vorteilhaften Ausgestaltung des Verfahrens werden beim Erzeugen des Prüflaufs, insbesondere Einfügen von Emissions-relevanten Fahrmanövern, Verändern eines vordefinierten Prüflaufs oder Zusammensetzen des Prüflaufs, vordefinierte Kriterien, vorzugsweise gesetzliche Vorgaben, vorzugsweise eine RDE-Zyklus-Gültigkeit und/oder eine RDE-Konformität, bei einer Auswahl der Art von Fahrmanöver und/oder einer Priorisierung von Fahrmanövern untereinander und/oder einer Anzahl jeweiliger Fahrmanöver berücksichtigt berücksichtigt.

Eine RDE-Zyklus-Gültigkeit im Sinne der Erfindung ist vorzugsweise eine RDEkriteriengültige und damit emissionsgesetzgebungskonforme Abdeckung des Stadtverkehrs, des Landverkehrs und des Schnellstraßenverkehrs in einem Prüflauf sowie gegebenenfalls vorgegebener Umweltbedingungen oder Umgebungsbedingungen, wie Temperatur, Höhe, maximal akkumulierte Fahrbahnsteigung, etc.

Eine RDE-Konformität im Sinne der Erfindung ist vorzugsweise ein Einhalten von Emissionsgrenzwerten in einem Prüflauf.

Vorzugsweise wird ein Prüflauf in der Weise zusammengesetzt, dass er auf der Grundlage der Betriebsdaten des Datensatzes für alle oder wenigstens die meisten Nutzungszyklen RDE-konform ist oder bewusst einem zu definierendem Vielfachen einzelner oder mehrerer Kriterien im Entwicklungsnutzungskontext entspricht. Vorzugsweise wird der Fahrzyklus dabei in der Weise erzeugt, dass dieser möglichst nah an den Grenzwerten zur RDE-Konformität ist. Auf diese Weise kann gewährleistet werden, dass ein in dem erzeugten Prüflauf betriebener Prüfling mit hoher Wahrscheinlichkeit auch in der Vielzahl an Nutzungszyklen stets RDE-konform gewesen wäre.

In einer weiteren vorteilhaften Ausgestaltung der erfindungsgemäßen Verfahren wird beim Erzeugen des Prüflaufs der Prüflauf des Weiteren aus Vorkonditionierungsmanövern zusammengesetzt, welche vorzugsweise vor Fahrmanövern, die Emissions-relevanten Ereignissen zugeordnet sind, im Prüflauf angeordnet werden.

Durch das Anordnen von Vorkonditionierungsmanövern im Prüflauf kann sichergestellt werden, dass der Prüfling, insbesondere eine Komponente des Fahrzeugs oder das Fahrzeug, beim Beginn von Emissions-relevanten Fahrmanövern in einem prüfrelevanten, vorzugsweise hinsichtlich Emissionsentstehung besonders kritischem, und/oder einem vorzugsweise realistisch erreichbaren kundenrelevanten Systemzustand ist. Vorzugsweise werden beispielsweise ein oder mehrere, beispielsweise Abkühlungs- oder Erhitzungs- oder andersartige Vorkonditionierungsmanöver vorgesehen, bevor eine zu definierende Zahl Emissions-relevanter Manöver in dem Prüflauf darauf folgen.

In einer weiteren vorteilhaften Ausgestaltung des Verfahrens der Erfindung werden bei Einfügen und/oder Zusammensetzen eines Prüflaufs zwischen aufeinanderfolgenden Fahrmanövern Zwischenfahrmanöver eingefügt, so dass der Prüflauf einen stetigen Verlauf aufweist, wobei die Zwischenfahrmanöver vorzugsweise Beschleunigungsvorgänge und/oder Abbremsvorgänge sind.

Durch das Einfügen von Zwischenfahrmanövern kann eine Stetigkeit eines Geschwindigkeitsablaufs oder eines Belastungsablaufs, welcher durch den Prüflauf definiert wird, sichergestellt werden. Insbesondere an realen Fahrzeugen bzw. realen Prüflingen wird auf diese Weise realitätsnahe und damit kundenrelevante Systemprüfung sichergestellt.

In einer weiteren vorteilhaften Ausgestaltung des Verfahrens weisen die Eigenschaften des spezifischen Fahrzeugs die Hardwarekonfiguration und/oder - architektur des spezifischen Fahrzeugs auf, wobei das Verfahren des Weiteren den folgenden Arbeitsschritt aufweist:

Filtern des Datensatzes und/oder der Emissions-relevanten Ereignisse in Bezug auf eine vorbestimmte Hardwarekonfiguration und/oder -architektur der Fahrzeuge;

wobei der Prüflauf wenigstens im Wesentlichen oder ausschließlich auf der Grundlage des gefilterten Datensatzes und/oder der gefilterten Emissions-relevanten Ereignisse erzeugt wird, so dass vorzugsweise Daten von Fahrzeugen, welche die vorbestimmte Hardwarekonfiguration und/oder -architektur, insbesondere eines spezifischen Fahrzeugs, aufweisen, berücksichtigt werden.

Durch eine solche Filterung kann der erzeugte Prüflauf eine bessere Gültigkeit für bestimmte Klassen von Fahrzeugen bzw. Arten von Komponenten oder Systemen bereitstellen.

In einer weiteren vorteilhaften Ausgestaltung weist das erfindungsgemäße Verfahren des Weiteren den folgenden Arbeitsschritt auf:

Filtern des Datensatzes und/oder der Emissions-relevanten Ereignisse in Bezug auf vorbestimmte Geschwindigkeits-Bins;

wobei beim Erzeugen des Prüflaufs jeweils Fahrmanöver aus einem zur jeweils vorliegenden Geschwindigkeit im Prüflauf passenden Geschwindigkeitsbin ausgewählt werden.

Auf diese Weise kann sichergestellt werden, dass die Geschwindigkeitsverhältnisse eines bestimmten Fahrmanövers auch jenen in dem zu erzeugenden Prüflauf entsprechen. Auch dies führt zu einer höheren Gültigkeit der mittels eines Prüflaufs ermittelten Emissions-Charakteristika.

In einer weiteren vorteilhaften Ausgestaltung des Verfahrens umfasst das Normieren ein Berechnen eines Ablaufs einer fahrzeugspezifischen Leistung (VSP) auf der Grundlage eines Geschwindigkeitsablaufs und/oder eines Belastungsablaufs eines jeweiligen Nutzungszyklus.

Das Berechnen oder Transformieren des Geschwindigkeitsablaufs oder des Belastungsablaufs in die fahrzeugspezifische Leistung ermöglicht eine besonders zuverlässige Normierung der Betriebsdaten.

In einer vorteilhaften Ausgestaltung des Verfahrens werden beim Berechnen des Ablaufs der fahrzeugspezifischen Leistung (VSP) Eigenschaften, insbesondere eine Fahrzeugmasse, wenigstens ein Übersetzungsverhältnis des Antriebsstrangs und/oder fahrzeugspezifische Parameter, jenes Fahrzeugs, welches einen jeweiligen Nutzungszyklus durchlaufen hat, berücksichtigt.

In einer weiteren vorteilhaften Ausgestaltung des Verfahrens wird der Prüflauf als Ablauf einer fahrzeugspezifischen Leistung (VSP) erzeugt, wobei der Ablauf einer fahrzeugspezifischen Leistung (VSP) und/oder Segmente des Ablaufs einer fahrzeugspezifischen Leistung (VSP), welche jeweils Fahrmanövern entsprechen, unter Berücksichtigung der Eigenschaften des spezifischen Fahrzeugs, insbesondere einer Fahrzeugmasse und/oder von Übersetzungsverhältnissen des Antriebsstrangs und/oder fahrzeugspezifischer Parameter und/oder Volllast-Daten, in den Prüflaufraum des spezifischen Fahrzeugs transformiert werden.

Die in Bezug auf die Verfahren beschriebenen Merkmale und Vorteile gelten entsprechend auch für die Systeme der anderen Aspekte entsprechend und umgekehrt.

In einer vorteilhaften Ausgestaltung des Verfahrens nach dem vierten Aspekt wird in Schritt c) ein bestehender Prüflauf auf Vorhandensein der Prüflingsmanöver überprüft und bei Vorhandensein als ausgewählter Prüflauf festgelegt, oder die Prüflingsmanöver zu einem Prüflauf kombiniert, oder ein bestehender Prüflauf mit den Prüflingsmanövern zu einem neuen Prüflauf ergänzt.

Auf diese Weise kann die Konformität anlassbezogen sichergestellt werden.

Die erfindungsgemäßen Verfahren können vorzugsweise mittels eines Computers ausgeführt werden. In diesem Fall handelt es sich um computer-gestützte Verfahren. Entsprechend betrifft ein weiterer Aspekt der Erfindung ein Computerprogramm, das Anweisungen umfasst, welche, wenn sie von einem Computer ausgeführt werden, diesen dazu veranlassen, die Arbeitsschritte eines der erfindungsgemäßen Verfahren auszuführen. Ein weiterer Aspekt der Erfindung betrifft ein Computerlesbares Medium, auf dem ein solches Computerprogramm gespeichert ist.

Weitere Merkmale und Vorteile werden nachfolgend anhand nicht einschränkender Ausführungsbeispiele näher erläutert, welche in den Figuren dargestellt sind. Darin zeigen wenigstens teilweise schematisch:

**Fig. 1a**      einen schematischen Ablauf eines Verfahrens zum Erzeugen eines Prüflaufs;

**Fig. 1b**      eine Fortsetzung des schematischen Ablaufs des Verfahrens aus Fig. 1a;

**Fig. 2**      ein Verfahren zur Generierung einer Manöverdatenbank;

**Fig. 3**      ein Verfahren zum statistischen Auswerten derartiger Manöverdatenbanken;

**Fig. 4**      ein weiteres Verfahren zum Generieren einer Manöverdatenbank;

**Fig. 5 a-f**      Diagramme, welche ein beispielhaftes statistisches Auftreten Emissionsrelevanter Fahrmanöver veranschaulichen;

**Fig. 6**      einen beispielhaften Ablauf eines Arbeitsschritts zum Erzeugen eines Prüflaufs;

**Fig. 7**      einen Vergleich des Geschwindigkeitsablaufs eines Basiszyklus und eines mittels der Verfahren zum Erzeugen eines Prüflaufs erzeugten Prüflaufs;

**Fig. 8**      einen Vergleich des Pedalstellungsablaufs eines Basiszyklus und eines mittels der Verfahren zum Erzeugen eines Prüflaufs erzeugten Prüflaufs;

**Fig. 9**      einen Vergleich der Fahrbahnsteigung/der Fahrbahnneigung/des Gradienten eines Basiszyklus und eines mittels eines Verfahren zum Erzeugen eines Prüflaufs erzeugten Prüflaufs;

**Fig. 10**      ein Verfahren zum Testen eines Prüflings;

**Fig. 11**      ein Verfahren zur Durchführung eines Prüflaufs eines Prüflings;

**Fig. 12**      ein System zum Erzeugen eines Prüflaufs; und

**Fig. 13** ein System zur Durchführung eines Prüflaufs eines Prüflings.

Das erfindungsgemäße Verfahren betrifft die Ermittlung eines Fahrzyklus bzw. Prüflaufs, mit dem die Konformität mit gesetzlichen Vorgaben, insbesondere den RDE-Vorgaben geprüft und sichergestellt oder gezielt im Sinne einer Emissionsrobustheitsprüfung überschritten werden soll, sowie die Durchführung eines Prüflaufs eines Prüflings nach einem solchen Prüflauf.

Ausgehend von einer Datenermittlungsphase werden besonders emissionsrelevante Fahrmanöver identifiziert und ihr Vorhandensein in absolvierten Fahrzyklen überprüft bzw. die Integration in geplante Fahrzyklen durchgeführt. Dabei wird insbesondere darauf geachtet, den Fahrzyklus mit allen für emissionsrelevant erachteten Fahrsituationen bzw. -manövern zu ergänzen, um eine Konformität auch in der Serienproduktion oder einer gesamten Fahrzeugflotte eines Fahrzeugtyps mit den gesetzlichen Anforderungen sicherstellen zu können und vorzugsweise ergänzend auch eine gezielte Erweiterung der Anforderungen im Sinne einer Emissionsrobustheitsabsicherung darzustellen.

Nachfolgend wird als Ausführungsbeispiel insbesondere auf die RDE-Bestimmungen Bezug genommen. Ein RDE-Testzyklus muss demnach in der Stadt beginnen und auf Landstraßen und Autobahnen zu definierten Anteilen fortgesetzt werden: Es ist vorzugsweise 34 % Stadtbetrieb, 33 % Landstraßenbetrieb und 33 % Autobahnbetrieb vorzusehen.

Die Zuordnung der einzelnen Messwerte erfolgt dabei über die Geschwindigkeit, bei denen sie ermittelt wurden - Stadtbetrieb ist gekennzeichnet durch Fahrzeuggeschwindigkeiten von höchstens 60 km/h, die Fahrzeuggeschwindigkeiten für Landstraßenbetrieb liegen zwischen 60 km/h und 90 km/h, für Autobahnbetrieb über 90 km/h. Je nach Fahrzeuggeschwindigkeit werden die Messwerte einer dieser drei Betriebsarten bzw. Geschwindigkeitsbins (Engl: "speed bin") zugeordnet. Die Aufteilung in Geschwindigkeitsbins gibt dabei im Wesentlichen die Kriterien für eine RDE-Zyklus-Gültigkeit eines Prüflaufs vor. Dabei dürfen die Emissionen eines Fahrzeugs bzw. Fahrzeugtyps während der gesamten normalen Lebensdauer definierte Grenzwerte ("not to exceed" - NTE) nicht überschreiten, die als Produkt aus einem Emissionsgrenzwert und einem Konformitätsfaktor ("conformity factor"-CF) definiert sind. Grundsätzlich können auch andere wie RDE-gültige-Prüfläufe mit den beschriebenen Verfahren und Systemen erzeugt werden.

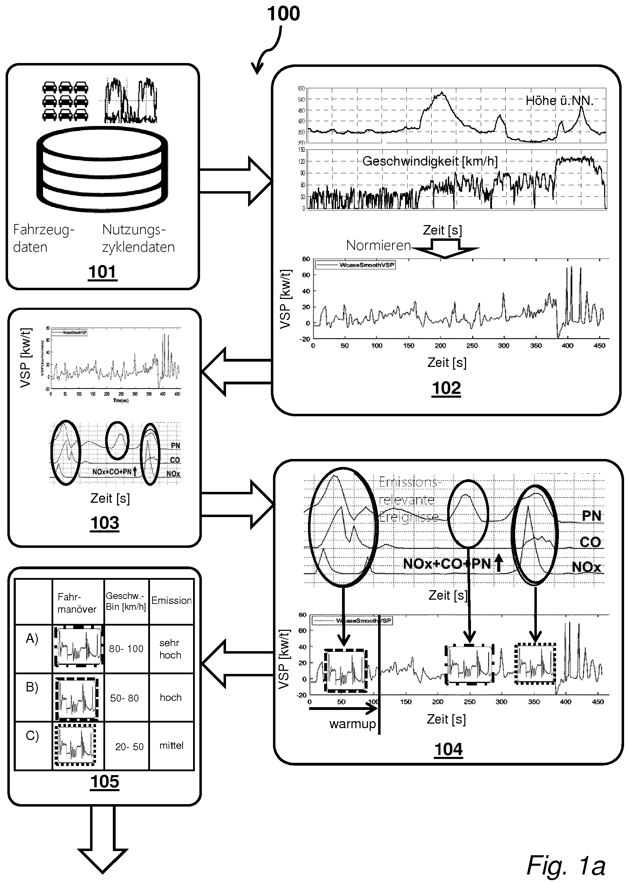

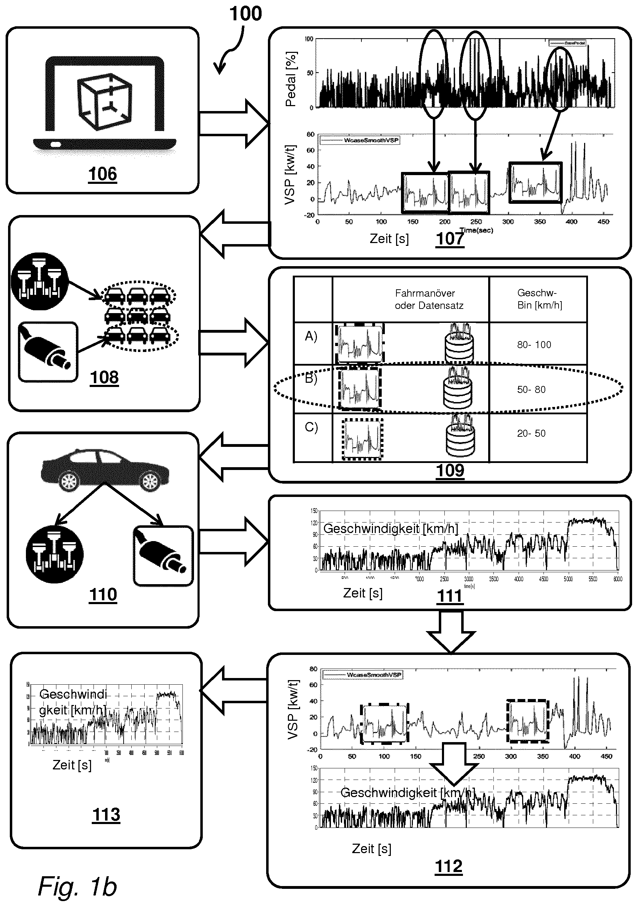

Der grundsätzliche Ablauf eines Ausführungsbeispiels eines Verfahrens zum Erzeugen eines Prüflaufs ist in den **Fig. 1a und 1b** dargestellt. Zur verbesserten Übersicht wurde das Ausführungsbeispiel auf zwei Seiten dargestellt. Nach dem Schritt 105 in Fig. 1a folgt vorzugsweise der Schritt 106 in Fig. 1b.

Dabei handelt es sich um einen rein beispielhaften Ablauf des erfindungsgemäßen Verfahrens zum Erzeugen eines Prüflaufs. Insbesondere sind bei diesem Verfahren nicht alle dargestellten Arbeitsschritte notwendig, um das erfindungsgemäße Verfahren zum Erzeugen eines Prüflaufs auszuführen. Das heißt, einige der Arbeitsschritte sind fakultativ. Auch die Reihenfolge der einzelnen Arbeitsschritte ist nicht auf die in Fig. 1 dargestellte Anordnung der Mittel zur Durchführung der einzelnen Arbeitsschritte beschränkt. Die einzelnen Arbeitsschritte des Verfahrens 100 können vorzugsweise auch in anderer Reihenfolge ausgeführt werden. Beispielsweise sind die Arbeitsschritte 105 bis 111 nur fakultativ, und weiter beispielsweise können die Arbeitsschritte 102 und 103 und 104 auch in beliebig anderer Reihenfolge, wie der in Fig. 1a dargestellten, ausgeführt werden.

In einem ersten Schritt 101 ("Data Preparation") wird die Datenbereitstellung durchgeführt. Dazu werden Messwerte für verschiedene Prüflingsparameter in Form von Fahrzeug- und Zyklusparametern bzw. Emissionsmesswerten aggregiert, wobei spezielle RDE-Testfahrten, Flottendaten oder andere Daten zusammengefasst werden können. Ergänzend werden Eigenschaften der getesteten Fahrzeuge gesammelt.

Vorzugsweise wurden hierfür Betriebsdaten von verschiedenen Fahrzeugen in einer Vielzahl von Nutzungszyklen ausgelesen und gespeichert. Bei den Nutzungszyklen kann es sich um Fahrzyklen handeln, welche von realen Fahrzeugen im Feld, das heißt auf der Straße oder auch auf einem Fahrzeugprüfstand, zurückgelegt worden sind. Alternativ können die Nutzungszyklen auch von einem Antriebsstrang oder einem Motor auf einem Antriebsstrangprüfstand oder Motorenprüfstand absolviert worden sein. Das Fahrwerk und/oder das Getriebe wird bzw. werden hierbei vorzugsweise simuliert. Bei den Fahrzeugen kann es sich um reale Fahrzeuge, aber auch um simulierte Fahrzeuge handeln. Auch die Antriebseinheit oder der Antriebsstrang oder andere Fahrzeugkomponenten, welche als Prüflinge eingesetzt werden, können real sein oder simuliert werden. Beispielsweise kann die Vielzahl an Nutzungszyklen mittels einer Hardwaresimulation des Fahrzeugs oder wenigstens einzelner Teile des Fahrzeugs unter Berücksichtigung von Nutzungszyklen, welche reale Fahrzeuge ausgeführt haben, simuliert werden.

Ein solcher Datensatz weist vorzugsweise sowohl Fahrzeugdaten als auch Betriebsdaten der Nutzungszyklen auf, wobei die Fahrzeugdaten insbesondere Daten über die Eigenschaften der getesteten Fahrzeuge, insbesondere Hardwarekonfigurationen und -architekturen, umfassen.

Vorzugsweise werden die Betriebsdaten der Nutzungszyklen in einem weiteren Arbeitsschritt 102 normiert, um verschiedene Nutzungszyklen und/oder verschiedene Fahrzeugtypen vergleichbar machen zu können.

Bei der Normierung der Betriebsdaten wird vorzugsweise eine Straßenneigung an jeder Stelle der einzelnen Nutzungszyklen, aus welchen die Betriebsdaten bestehen, berücksichtigt. Vorzugsweise werden die jeweiligen Umweltbedingungen, insbesondere Temperatur und/oder Luftfeuchtigkeit und/oder Witterung und/oder Fahrbahnzustand, berücksichtigt. Des Weiteren kann ein Normieren vorzugsweise auch ein Ausgangsfahrmanöver und/oder eine Vorkonditionierung berücksichtigen. Durch die Vorkonditionierung wird ein jeweiliger Systemstatus von einzelnen Komponenten des Fahrzeugs an jeder Stelle der Nutzungszyklen transparent gemacht. Sowohl das Ausgangsfahrmanöver, das heißt das Fahrmanöver vor dem aktuell vorliegenden Fahrmanöver, als auch der Vorkonditionierungsstatus können hierbei einen Einfluss auf die Emissionen im jeweils untersuchten Fahrmanöver haben. Beispielsweise kann der Regenerationsstatus eines SCR-Katalysators berücksichtigt werden, wobei dieser Status einen Einfluss auf die $NO_x$-Emissionen hat.

Weiter vorzugsweise wird beim Normieren die Vielzahl der Nutzungszyklen bzw. deren Betriebsdaten, welche in dem Datensatz als Geschwindigkeits-/Fahrbahnsteigungsabläufe in jedem Segment des Prüflaufs oder Drehzahl-/Drehmomentabläufe in jedem Segment des Prüflaufs vorliegen, in eine fahrzeugspezifische Leistung (Englisch: "vehicle-specific power - VSP") transformiert. Bei der fahrzeugspezifischen Leistung werden als Eingangsparameter insbesondere die Fahrzeuggeschwindigkeit v, die Fahrzeugbeschleunigung a, die Schwerkraftbeschleunigung g und/oder die Fahrbahnsteigung berücksichtigt. Vorzugsweise werden des Weiteren ein Fahrwiderstand und ein Zugkoeffizient berücksichtigt.

Vorzugsweise wird die fahrzeugspezifische Leistung VSP wie folgt definiert:

$$VSP = \left(R_0 + R_1 V + R_2 V^2 + m_V \frac{dV}{dt} + m_V g \sin\theta\right) \cdot \frac{V}{m_V}$$

Alternativ kann fahrzeugspezifische Leistung VSP auch wie folgt definiert werden:

$$VSP = v \cdot (a + g \cdot \sin\theta + \Psi) + \xi \cdot v^3$$

wobei:

$R_0$, $R_1$, $R_2$: fahrzeugspezifische Koeffizienten oder Parameter

$m_V$: Fahrzeugmasse

$\theta$: Gradient

$g$: Erdbeschleunigung$v$: Fahrzeuggeschwindigkeit

a: Fahrzeugbeschleunigung

g: Erdbeschleunigung

$\theta$: Fahrbansteigung

$\Psi$: Rollwiderstands-Koeffizient

$\xi$: Luftwiderstands-Koeffizient

Vorzugsweise werden als weitere Parameter die Getriebeübersetzung und die Volllastdaten eines Fahrzeugs berücksichtigt.

Das Ergebnis einer Normierung in Bezug auf eine fahrzeugspezifische Leistung ist vorzugsweise ein zeitlicher Ablauf in Leistung pro Masse, in Fig. 1a in dem Block des Arbeitsschritts 102 in der Einheit Kilowatt pro Tonne angegeben. In den Block des Arbeitsschritts 102 sind hierbei jeweils die Höhe über Nullniveau einer Position des Fahrzeugs (oben) und die Geschwindigkeit (mitte) als Diagramme gegenüber der Zeit dargestellt. Darunter ist die normierte fahrzeugspezifische Leistung VSP auf der gleichen Zeitachse dargestellt

Mittels des Normierens werden Emissionsdaten bzw. Emissions-relevante Ereignisse von verschiedenen Fahrzeugen in verschiedenen Nutzungszyklen vergleichbar gemacht.

Alternativ oder zusätzlich zu einer Normierung mittels der fahrzeugspezifischen Leistung (VSP) kann auch eine Normierung über eine Betriebspunktäquivalenzumrechnung vorgenommen werden.

Hierbei werden die ermittelten Betriebsdaten der Nutzungszyklen, insbesondere angegeben durch Fahrbahnsteigung und Fahrzeuggeschwindigkeit, unter Berücksichtigung eines Übersetzungsverhältnisses und eines Wirkungsgrads, welche vorzugsweise Getriebe und Differential berücksichtigen, der zur Durchführung der Nutzungszyklen eingesetzten Fahrzeuge zu einer normierten Motorleistung, insbesondere charakterisiert durch Motormoment und Motordrehzahl, transformiert, welche den Betriebsbereich des Motors definieren. Dem liegt die Idee zu Grunde, dass sich an Betriebspunkte geknüpfte Emissionsherausforderungen in Manövern aus der Manöverdatenbank, an den zur Durchführung der Nutzungszyklen eingesetzten Fahrzeugen wiederfinden.

Sowohl die fahrzeugspezifische Leistung (VSP) als auch die Betriebspunktäquivalenzumrechnung eignen sich zur Normierung von Betriebsdaten und können wahlweise, und vorzugsweise auch in Kombination eingesetzt werden.

Des Weiteren können weitere Normierungsmethoden auf die Betriebsdaten angewandt werden, welche allein oder in Kombination mit den oben beschriebenen Normierungsmethoden zum Einsatz kommen können. Insbesondere können die Fahrzeuge nach Masse-Leistungs-Verhältnis bzw. Leistungsgewicht klassifiziert werden.

In einem dritten Schritt 103 ("Data Screening") werden die Daten auf emissionsrelevante Events bzw. Fahrmanöver untersucht, durch die es z.B. zu Engine-Out NOx-Peaks/PN/CO-Peaks oder zu einer Verschlechterung der Funktion eines Abgasnachbehandlungssystems (EAS) kommt. Dadurch ergibt sich eine Event- bzw. Manöverdatenbank. Darin sind Prüflingsmanöver definiert, die durch besagte Prüflingsparameter gekennzeichnet sind, die im ursächlichen Zusammenhang mit über - z.B. gesetzlich vorgegebenen - Grenzwerten liegenden Emissionsmesswerten liegen.

Auch in dem Block des Arbeitsschritts 103 sind der zeitliche Ablauf der fahrzeugspezifischen Leistung VSP eines Nutzungszyklus dargestellt sowie auf derselben Zeitachse die Partikelanzahl PN, die Kohlenmonoxid-Emission und/oder die Kohlenstickstoffoxid ($NO_x$)-Emission aufgetragen. Emissions-relevante Ereignisse, die während des Nutzungszyklus aufgetreten sind, sind eingekreist dargestellt.

An jenen Stellen, an welchen Emissions-relevante Events, auch Emissions-relevante Ereignisse genannt, auftreten, werden diesen Ereignissen jeweils Prüfungsmanöver, auch Fahrmanöver genannt, in einem weiteren Schritt 104 zugeordnet. In dem Block zu Arbeitsschritt 104 werden oben wiederum die Emissions-relevanten Ereignisse dargestellt, welche in Arbeitsschritt 103 identifiziert wurden, und darunter mit verschiedener Strichelung umrandet jene Fahrmanöver in dem Ablauf der fahrzeugspezifischen Leistung (VSP), welche diesen Emissions-relevanten Ereignissen dieses speziellen normierten Nutzungszyklus entsprechen. Statt einem auf die fahrzeugspezifische Leistung (VSP) normierten Nutzungszyklus können die Emissions-relevanten Events aber auch in dem Nutzungszyklus an sich identifiziert werden.

Die Fahrmanöver werden vorzugsweise auf der Grundlage einer Manöverdatenbank 4 identifiziert. Vorzugsweise sind dort Abfolgen von Fahrzuständen bzw. Sequenzen von Wertekonstellationen einer Mehrzahl an Betriebsparametern eines Fahrzeugs abgelegt, welche bekannte Fahrmanöver charakterisieren. Diese bekannten Fahrmanöver werden den erkannten Emissions-relevanten Ereignissen zugeordnet.

Alternativ oder zusätzlich können auch neue Fahrmanöver erkannt werden und in der Manöverdatenbank 4 abgelegt werden. Auf diese Weise kann eine neue Manöverdatenbank 4 erstellt werden oder auch eine bestehende Manöverdatenbank 4 um noch unbekannte Manöver ergänzt werden. Weiter vorzugsweise werden jene Fahrmanöver, welche als Emissions-relevant identifiziert werden, in der Manöverdatenbank 4, 4' entsprechend gekennzeichnet.

In einem fünften Schritt 105 und sechsten Schritt 106 ("Statistical Analysis") werden die Daten bzw. identifizierten Events/Fahrmanöver statistisch untersucht. Ermittelt wird beispielsweise die Häufigkeit bzw. eine Reihung der Fahrmanöver basierend auf dem durch sie verursachten Emissionsanstieg, bzw. eine Zuordnung dieser Reihung zu den verschiedenen Betriebsarten bzw. "speed bins".

Beispielsweise wird in dem fünften Schritt 105 eine Ordnung, auch Klassifizierung genannt, der Fahrmanöver nach der in dem jeweiligen Fahrmanöver aufgetretenen Grad an Emission, insbesondere einem Emissionsanstieg gegenüber einem vorher im Nutzungszyklus aufgetretenen Fahrmanöver, das heißt dem Ausgangsmanöver, vorgenommen.

Alternativ oder zusätzlich wird die Klassifizierung nach Geschwindigkeits-Bins, das heißt Geschwindigkeitsbereichen, in welchen die jeweiligen Fahrmanöver aufgetreten sind, vorgenommen. In dem in dem Block des Schritts 105 dargestellten Beispiel war die Emission bei dem Fahrmanöver A) am höchsten. Gleichzeitig ist dieses Fahrmanöver einem Geschwindigkeits-Bin von 80 bis 100 km/h zugeordnet, das heißt dieses Fahrmanöver ist in diesem Geschwindigkeits-Bin aufgetreten. Das Fahrmanöver B) mit der zweithöchsten Emission ist dagegen in dem Geschwindigkeits-Bin 50 bis 80 km/h aufgetreten. Weitere vorzugsweise Geschwindigkeits-Bins sind 0 bis 60 km/h, 60 bis 90 km/h und > 90 km/h. Dies sind die Stadt-, Überland- und autobahncharakterisierenden Geschwindigkeitsbereiche der EU.

Vorzugsweise wird in dem sechsten Schritt 106 ein Auftreten der Fahrmanöver mittels statistischer Methoden untersucht. Vorzugsweise wird hierbei eine Häufigkeit eines Auftretens eines bestimmten Fahrmanövers in den Nutzungszyklen untersucht. Des Weiteren wird vorzugsweise untersucht, bei welchen Fahrmanövern eine vergleichsweise hohe Emission und/oder ein vergleichsweise hoher Emissionsanstieg aufgetreten sind.

Ist eine Emissions-relevanz eines bestimmten Fahrzeugmanövers bekannt oder wurden diesem Fahrzeugmanöver bereits Emissions-relevante Ereignisse zugeordnet oder wurde das Fahrmanöver bereits klassifiziert 105, kann der Datensatz auf das Auftreten dieser Manöver geprüft werden 103, ohne Emissionsdaten zu prüfen. In diesem Fall werden in den Betriebsdaten keine Emissionsdaten benötigt.

In einem zu erzeugenden Prüflauf werden die Häufigkeiten des Auftretens der einzelnen Fahrmanöver dann vorzugsweise von der Häufigkeit des Auftretens der Fahrmanöver in den untersuchten Nutzungszyklen abhängig gemacht.

In einem siebten Schritt 107 wird vorzugsweise geprüft, an welchen Stellen der Nutzungszyklen Benutzer-Aktionen, beispielsweise eine Betätigung eines Gaspedals der Fahrzeuge, auftreten. In dem Block des Schritts 107 ist zur Verdeutlichung oben eine Pedal-Position in Prozent der Vollgas-Position und darunter die fahrzeugspezifische Leistung (VSP) auf derselben Zeitschiene dargestellt. In den drei mittels Kreisen markierten Bereichen des dargestellten Pedalablaufs tritt eine vorbestimmte Kriterien erfüllende Betätigung des Fahrpedals durch den Benutzer auf. Durch die Pfeile ist wiederum angegeben, welche Fahrmanöver in den spezifischen Leistungsablauf dieser Benutzer-Aktionen zugeordnet werden können.

Vorzugsweise werden ausschließlich solche Fahrzustände zum Erzeugen des Prüflaufs herangezogen, welche im Zusammenhang mit diesen identifizierten Benutzer-Aktionen stehen, das heißt im vorliegenden Fall jenen Fahrmanövern, welche schwarz umrandet sind. Auch diese Information kann in der Manöverdatenbank 4 hinterlegt werden.

In einem achten Schritt 108 werden der Datensatz und/oder die Emissions-relevanten Ereignisse in Bezug auf vorbestimmte Hardwarekonfiguration und/oder -architektur der Fahrzeuge gefiltert.

Vorzugsweise wird der Prüflauf dann auf der Grundlage des gefilterten Datensatzes und/oder der gefilterten Emissions-relevanten Ereignisse erzeugt. Auf diese Weise werden lediglich Daten von Fahrzeugen, welche die vorbestimmte Hardwarekonfiguration und/oder -architektur, insbesondere eines spezifischen Fahrzeugs, aufweisen, bei dem Erzeugen des Prüflaufs berücksichtigt.

Beispielsweise kann auf diese Weise zwischen Fahrzeugen mit Ottomotoren und Fahrzeugen mit Dieselmotoren unterschieden werden, oder auch in der Gruppe der Diesel-Fahrzeuge zwischen verschiedenen Abgasnachbehandlungssystemen (Englisch: Exhaust Aftertreatment Systems - EAS). Des Weiteren kann vorzugsweise zwischen verschiedenen Motor-Elektroverbund-Konfigurationen oder Motorkonfigurationen, beispielsweise mit Hochdruck- oder Niederdruckbetrieb unterschieden werden.

In dem Block zu Schritt 108 werden verschiedene Gruppen der Vielzahl an Fahrzeugen durch die Motor-Art, symbolisiert durch Zylinder, oder durch das Abgasnachbehandlungssystem, symbolisiert durch einen Auspuff, charakterisiert.

In einem Schritt 109 werden der Datensatz und/oder die Emissions-relevanten Ereignisse in Bezug auf vorbestimmte Geschwindigkeits-Bins gefiltert.

In dem Block des Schritts 109 in Fig. 1b wird die Filterung durch eine Auswahl des mit dem gepunkteten Kreis markierten Fahrmanövers oder Datensatz B) im Geschwindigkeits-Bin von 50 bis 80 km/h repräsentiert.

Vorzugsweise können die jeweiligen Fahrmanöver beim Erzeugen des Prüflaufs dann in der Weise ausgesucht werden, dass das Fahrmanöver in Bezug auf die Geschwindigkeit während seiner Ausführung zur an der Stelle des Prüflaufs vorliegenden Geschwindigkeit, an welchem das Fahrmanöver eingefügt oder angehängt wird, passt.

In einem zehnten Schritt 110 werden vorzugsweise Eigenschaften eines spezifischen Fahrzeugs, insbesondere eine Fahrzeugmasse, eine Architektur und/oder eine Hardwarekonfiguration eines spezifischen Fahrzeugs bereitgestellt. Ein spezifisches Fahrzeug ist hierbei ein bestimmtes Fahrzeug mit bestimmten Eigenschaften.

Vorzugsweise werden alle Parameter bereitgestellt, welche zur Transformation einer fahrzeugspezifischen Leistung (VSP) oder eines bestehenden Betriebspunktablaufes in der Datenbank in einen Belastungsablauf und/oder einen Geschwindigkeitsablauf notwendig sind. Hierdurch kann der Prüflauf bzw. jedes möglicherweise Emissions-relevanten Fahrmanövers auf das jeweils spezifische Fahrzeug adaptiert oder auch transformiert bzw. skaliert werden. Alternativ oder zusätzlich wird auch ein Fahrbahnsteigungsablauf in Schritt 110 bereitgestellt, so dass zusätzlich noch ein spezifisches Höhenprofil beim Erzeugen des Prüflaufs berücksichtigt werden kann.

Vorzugsweise wird dann der Prüflauf auf der Grundlage der Eigenschaften des spezifischen Fahrzeugs und/oder des spezifischen Höhenprofils erzeugt. Des Weiteren können auch Umweltbedingungen, wie Temperatur etc., berücksichtigt werden.

Alternativ oder zusätzlich zu einer Adaptierung oder Skalierung mittels der fahrzeugspezifischen Leistung (VSP) auf das spezifische Fahrzeug kann dies auch über eine im Vorhergehenden beschriebene Betriebspunktäquivalenzumrechnung erfolgen, wenn die dafür notwendigen Eingangsdaten vorliegen.

Hierbei wird die vorzugsweise normierte Motorleistung, insbesondere die der charakterisierenden Betriebspunkte definiert durch Motormoment und Motordrehzahl, mittels einem Übersetzungsverhältnis und einem Wirkungsgrad des spezifischen Fahrzeugs zu einer Belastung und/oder Geschwindigkeit des Fahrzeugs, insbesondere charakterisiert durch Fahrbahnsteigung und Fahrzeuggeschwindigkeit, transformiert bzw. skaliert.

Wurden weitere oder alternative Normierungsmethoden auf die Betriebsdaten angewandt, so werden auch diese Normierungen durch entsprechende Skalierungen auf das spezifische Fahrzeug berücksichtigt. In dem Block, welcher dem Schritt 110 in Fig. 1b entspricht, ist das spezifische Fahrzeug dargestellt. Mögliche Eigenschaften, die berücksichtigt werden, sind, wie dargestellt, die Art des Motors, repräsentiert durch die Kolben, oder eine Art eines Abgasnachbehandlungssystems, repräsentiert durch den Auspuff.

In einem zwölften Schritt 112 ("Maneuver Selection") wird ein Prüflauf, insbesondere ein "worst case"-Szenario oder schlechtestes mögliches bzw. maximal forderndes Szenario, das mit dem Prüflauf bzw. Testzyklus umgesetzt werden soll, definiert. Dementsprechend werden vorzugsweise die einzelnen, insbesondere häufigsten und Emissions-relevantesten, Fahrmanöver ausgewählt. Dabei werden insbesondere Art und Anzahl der Fahrmanöver je Betriebsart bzw. "speed bin" ausgewählt.

Die Emissions-relevantesten Fahrmanöver sind dabei jene, welche den Emissions-relevanten Ereignissen zugeordnet sind. Um zu einem schlechtest anzunehmenden Prüflauf (Englisch: Worst Case Cycle) zu gelangen, werden beim Erzeugen des Prüflaufs vorzugsweise solche Emissions-relevanten Fahrmanöver berücksichtigt.

Grundsätzlich wird der Prüflauf jedoch aus solchen Emissions-relevanten Fahrmanövern, welche Emissions-relevanten Ereignissen zugeordnet sind, und anderen Fahrmanövern zusammengesetzt. Vorzugsweise entstammen die anderen Fahrmanöver ebenfalls der Vielzahl an Nutzungszyklen, welche durch das vorliegende Verfahren zum Erzeugen eines Prüflaufs analysiert werden.

Vorzugsweise werden beim Zusammensetzen des Prüflaufs dabei vordefinierte Kriterien überwacht und berücksichtigt. Solche Kriterien können beispielsweise gesetzliche Vorgaben sein, zum Beispiel eine RDE-Zyklus-Gültigkeit oder auch eine RDE-Konformität.

Bei einer RDE-Zyklus-Gültigkeit wird gewährleistet, dass der RDE-Zyklus den gesetzlichen Vorgaben in Bezug auf einen RDE-Zyklus entspricht, zum Beispiel der Aufteilung zwischen Stadt-, Land- und Schnellstraßenverkehr. Auch die Gültigkeit von anderen Arten von Zyklen kann hier aber überwacht werden.

In einem auf diese Weise zusammengesetzten Prüflauf sollte ein Prüfling oder zu prüfendes Fahrzeug einer Fahrzeugflotte RDE-konform sein, um zu gewährleisten, dass alle Fahrzeuge der Flotte in jedem Nutzungszyklus unter allen möglichen Umweltbedingungen RDE-konform sind.

Weiter vorzugsweise wird der Prüflauf in der Weise erzeugt, dass der Belastungsablauf oder der Geschwindigkeitsablauf, welche den Prüflauf definieren, stetig sind. Vorzugsweise werden hierfür zwischen Emissions-relevanten Fahrmanövern und anderen Fahrmanövern Zwischenmanöver eingefügt.

Diese Zwischenmanöver weisen vorzugsweise weitere Beschleunigungs- und Bremsvorgänge auf. Die Schlussbelastung eines vorhergehenden Manövers oder die Anfangsbelastung oder Anfangsgeschwindigkeit eines nachfolgenden Manövers kann dann entsprechend an das Zwischenmanöver angekoppelt werden, so dass sich ein stetiger Verlauf des Prüflaufs ergibt.

Vorzugsweise hängt eine Häufigkeit von bestimmten Fahrmanövern in dem Prüflauf von einem Ergebnis des Auswertens eines Auftretens der Fahrmanöver nach dem sechsten Schritt 106 ab, wobei vorzugsweise Fahrmanöver, welche relativ oft in den Nutzungszyklen auftreten und/oder bei welchen eine relativ hohe Emission, insbesondere ein relativ hoher Emissionsanstieg, auftritt, eine erhöhte Häufigkeit in dem Prüflauf aufweisen. Weiter vorzugsweise werden zum Erzeugen des Prüflaufs wenigstens teilweise solche Fahrzustände herangezogen, welche im Zusammenhang mit Benutzeraktionen stehen.

Weiter vorzugsweise erfolgt das Erzeugen des Prüflaufs auf der Grundlage des Ergebnisses des Klassifizierens des fünften Schritts 105, wobei vorzugsweise Fahrmanöver, bei welchen eine relativ hohe Emission, insbesondere ein relativ hoher Emissionsanstieg, im Vergleich zu anderen Fahrmanövern auftritt, bevorzugt zum Erzeugen des Prüflaufs herangezogen werden.

Weiter vorzugsweise wird der Prüflauf wenigstens im Wesentlichen oder ausschließlich auf der Grundlage des in dem achten Arbeitsschritt 108 gefilterten Datensatzes und/oder der gefilterten Emissions-relevanten Ereignisse erzeugt, so dass vorzugsweise Daten von Fahrzeugen, welche die vorbestimmte Hardwarekonfiguration und/oder -architektur, insbesondere des spezifischen Fahrzeugs, aufweisen, berücksichtigt werden. Weiter vorzugsweise werden beim Erzeugen des Prüflaufs jeweils Fahrmanöver aus zu jeweils vorliegenden Geschwindigkeiten im Prüflauf passenden Geschwindigkeits-Bins ausgewählt.

Alternativ zum Zusammensetzen oder Synthetisieren des Prüflaufs aus einzelnen Emissions-relevanten Fahrmanövern, welche aus verschiedenen Nutzungszyklen entnommen sind und vorzugsweise auf ein spezifisches Fahrzeug angepasst werden, insbesondere durch eine Transformation eines Ablaufs einer fahrzeugspezifischen Leistung in einen Belastungsablauf oder Geschwindigkeitsablauf, kann der Prüflauf auch ausgehend von einem vordefinierten Prüflauf, auch Basiszyklus genannt, erzeugt werden.

Hierfür wird in einem elften Schritt 111 ("Worst Case Cycle") ein Basiszyklus ausgewählt oder bereitgestellt, der vorzugsweise die Voraussetzung erfüllt, dass er die gesetzlichen Rahmenbedingungen einhält, im gewählten Ausführungsbeispiel also RDE-kriteriengültig bzw. RDE-Zyklus-gültig ist. Bei dem vordefinierten Prüflauf oder Basiszyklus handelt es sich vorzugsweise um einen realen Nutzungszyklus eines Fahrzeugs, insbesondere des Prüflings oder des spezifischen Fahrzeugs.

In den Basiszyklus werden Emissions-relevante Fahrmanöver eingefügt, um besonders Emissions-relevante Ereignisse in dem Prüflauf angemessen zu berücksichtigen.

In dem Basiszyklus werden hierzu vorzugsweise diejenigen Stellen identifiziert, an denen die im vierten Schritt 104 identifizierten Fahrmanöver - die "worst case maneuver" mit besonderer Emissionsrelevanz - platziert werden können, um einen kontinuierlichen, durchführbaren Testzyklus zu erhalten. Damit wird ein Prüflauf festgelegt, der jedenfalls zumindest teilweise die den Emissions-relevanten Ereignissen zugeordneten Prüflingsmanöver bzw. Fahrmanöver verwendet.

Alternativ oder zusätzlich können auch die Fahrbahnsteigung und/oder Umweltbedingungen des vordefinierten Prüflaufs verändert werden, um Emissions-relevante Ereignisse zu berücksichtigen.

Vorzugsweise wird auch das Anpassen eines vordefinierte Prüflaufs, wie das Zusammensetzen eines Prüflaufs aus einzelnen Fahrmanövern, in einem Ablauf der fahrzeugspezifischen Leistung (VSP), das heißt im fahrzeugspezifischen Leistungsraum, durchgeführt. In diesem Fall wird der Prüflauf als Ablauf einer fahrzeugspezifischen Leistung (VSP) erzeugt. Erst nachdem dieser generische Prüflauf erzeugt ist, wird dieser unter Berücksichtigung der Eigenschaften eines spezifischen Fahrzeugs wieder in den Prüflaufraum dieses spezifischen Fahrzeugs transformiert. In diesem Prüflaufraum des spezifischen Fahrzeugs ist der Prüflauf wiederum als Belastungsablauf oder als Geschwindigkeitsablauf definiert.

Alternativ oder zusätzlich, können für diese Transformation, wie weiter oben beschrieben, auch andere Normierungs- und/oder Skalierungsmethoden zum Einsatz kommen.

Ausgehend vom Basiszyklus ergibt sich auf diese Weise ein in Bezug auf Emission besonders fordernder Prüflauf, auch "worst case cycle" genannt. Dieser kombinierte Prüflauf bzw. Fahrzyklus wird dann z.B. in eine Fahrzeuggeschwindigkeitsspur bzw. einen Geschwindigkeitsablauf des Fahrzeugs konvertiert. Zusätzlich können in den Prüflauf auch zusätzliche Vorgaben wie Gangwahl, Fahrpedalstellungen bzw. Gradienten alternativ oder kumulativ vorgegeben werden.

In einem dreizehnten Schritt 113 wird der erzeugte Prüflauf ausgegeben. Dieser kann dann insbesondere von Testingenieuren und/oder einem Prüfsystem dazu eingesetzt werden, um einen Prüfling zu testen. Alternativ oder zusätzlich kann der erzeugte Prüflauf als Referenz für andere Prüfläufe eingesetzt werden.

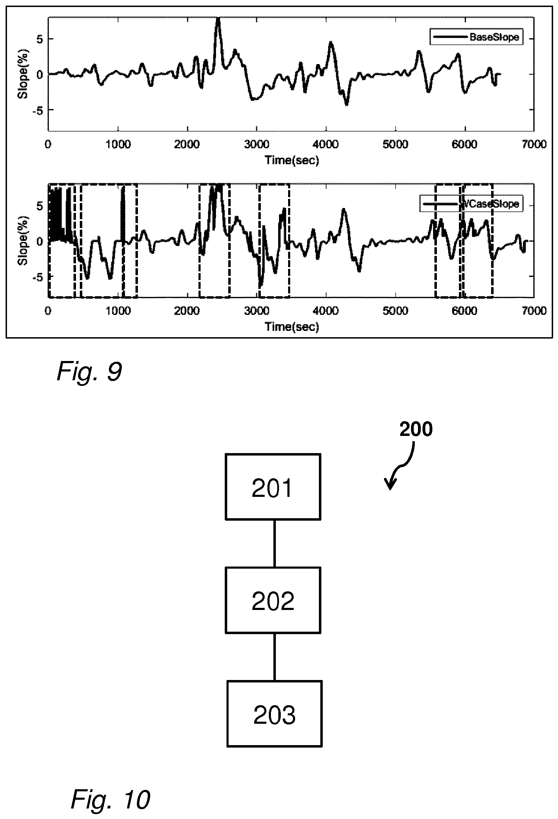

In **Fig. 10** wird ein weiteres Verfahren zum Testen eines Prüflings anhand eines Blockdiagramms erläutert. In diesem Verfahren wird zunächst ein Prüfling bereitgestellt 201. Vorzugsweise werden auch Eigenschaften eines spezifischen Fahrzeugs bereitgestellt, welches der Prüfling ist oder in welchem der Prüfling verbaut ist.

Dieser Prüfling wird vorzugsweise auf einem Prüfstand installiert. Weiter vorzugsweise ist der Prüfling teilweise oder vollständig als Simulationsmodell vorhanden und wird in diesem Fall auf einem Simulationsrechner betrieben.

In einem weiteren Schritt 202 wird ein Verfahren zum Erzeugen eines Prüflaufs ausgeführt. Ist der Prüfling ein Fahrzeug, so kann das Verfahren im Feld, das heißt auf der Straße, durchgeführt werden. In jedem Fall kann das Verfahren jedoch vorzugsweise auch auf einem Prüfstand durchgeführt werden oder, sofern der Prüfling als Simulationsmodell hinterlegt ist, auch als Simulation auf einem Simulationsrechner.

Schließlich wird der Prüflauf, welcher von dem Verfahren zum Erzeugen eines Prüflaufs ausgegeben wird, mit dem Prüfling in einem weiteren Schritt 203 du rchgefü h rt.

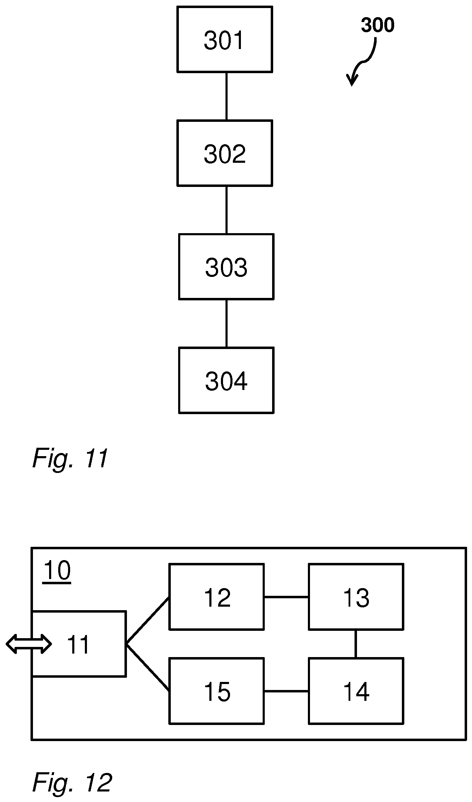

Fig. 11 erläutert den Ablauf eines Verfahrens zur Durchführung eines Prüflaufs eines Prüflings anhand eines weiteren Blockdiagramms.

Zunächst werden Prüflingsparameter und Emissionsmesswerte aus bereits durchgeführten Prüfläufen in einem Schritt 301 ermittelt.

Hierauf werden Prüflingsmanöver in einem zweiten Schritt 302 definiert, welche durch Prüflingsparameter gekennzeichnet sind, die im ursächlichen Zusammenhang mit über definierten Grenzwerten liegenden Emissionswerten liegen.

Ein Prüflauf wird in einem dritten Schritt 303 festgelegt, wobei zumindest teilweise in zumindest einem oder vorzugsweise mehreren Fällen die definierten Prüflingsmanöver eingesetzt werden.

In einem vierten Schritt 304 wird der Prüflauf durchgeführt, das heißt mit einem spezifischen Fahrzeug abgefahren, und auf seine RDE-Kriteriengültigkeit und/oder Konformität geprüft wird. Dieser Schritt kann auf einem Chassis-Dyno, auf der Straße bzw. vorzugsweise Teststrecke durch Vorschläge an einen Fahrer, sofern im Rahmen sicherer und erlaubter Fahrbedingungen umsetzbar, auf einem Motor-, Fahrzeug-, Antriebsstrang-, Komponenten- oder virtuellen Prüfstand ausgeführt werden.

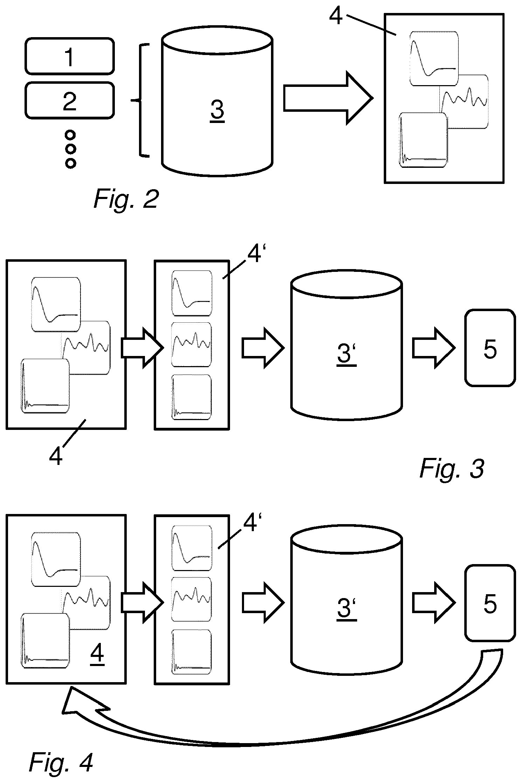

Ausgehend von bekannten bzw. bereits durchgeführten Testzyklen wird also eine Manöverdatenbank generiert. Wie eingangs erwähnt muss es sich dabei nicht um PEMS-RDE-Zyklen handeln, die also von RDE-Testfahrten stammen, sondern es sind grundsätzlich alle Testzyklen, auch beispielsweise RDE-Messungen auf vorzugsweise durch Simulation unterstützen Rollen-, Antriebsstrang-, Motor- oder Hardware-in-the-Loop-Prüfständen, sowie Messungen durch On-Board-Systeme verwendbar, solange die für das erfindungsgemäße Verfahren herangezogenen Kanäle vorhanden sind. Die Werte von Fahrzeugparametern und/oder Messwerte können dabei von den zu testenden/zertifizierenden Prüflingen bzw. Fahrzeugen, aber auch aus Flottenmessungen bzw. anderen Quellen stammen. Beispielhaft zeigt Fig. 2 verschiedene herangezogene Testzyklen wie RDE-Fahrten 1, Flottenmessungen 2 und weitere.

Bei den Kanälen kann es sich beispielsweise, aber nicht ausschließlich um einige oder alle der folgenden gemessenen Parameter handeln: Fahrzeuggeschwindigkeit, Pedalposition, durchschnittliche SCR-Temperatur, Status Bremssteuerung, zurückgelegte Distanz, Streckengradient, Umgebungstemperatur, Umgebungsdruck, Massenfluss nach Abgasnachbehandlungskomponenten, Drehmoment.

Des Weiteren werden als Parameter vorzugsweise Emissionsmessungen herangezogen, wie beispielsweise Messungen von NOx, Partikelzahl, CO, Masse der gesamten Kohlenwasserstoffe (THC) oder die Summe der Massen der gesamten Kohlenwasserstoffe und Stickoxide (THx + NOx), die zum Beispiel unter Verwendung von NOx-Sonden ermittelt werden. Auch Werte aus Abgasnachbehandlungssystemen wie Konvertierungsraten, Temperaturen (z.B. SCR-Temperatur, DPF-Temperatur, usw.) und Beladungszustände können vorzugsweise als Parameter herangezogen werden.

Die besagten Messwerte und/oder Werte für die Parameter ergeben einen bzw. mehrere Datenpools bzw. Datensätze - z.B. können unterschiedliche Datenpools bzw. Datensätze für Diesel- und Ottomotoren untersucht werden.

**Fig.** 2 zeigt beispielhaft einen derartigen Datenpool bzw. Datensatz 3, wobei natürlich in Varianten der Erfindung auch weitere Datenpools bzw. Datensätze zum Einsatz kommen können. Ein Datenpool ist vorzugsweise gleichbedeutend mit einem Datensatz.

Die Datenpools 3 werden nach emissionsrelevanten Events untersucht, insbesondere gescreent, beispielsweise nach NOx-Peaks (insb. bei Diesel-Motoren), oder nach NOx-, PN- und CO-Peaks (insb. bei Otto-Motoren), aber auch nach Extremwerten des Abgasnachbehandlungssystems (EAS) infolge von beispielsweise Temperaturerhöhung oder absenkung oder anderer Betriebsparameter, die durch Verschlechterung der Konvertierungsraten Auswirkungen auf die Fahrzeugemissionen haben.

Unter emissionsrelevanten Events sind insbesondere solche Events zu verstehen, die aufgrund ihrer Emissionen einen relevanten Einfluss auf das Einhalten gesetzlicher Rahmenbedingungen, hier also der RDE-Regelungen, haben. Anhand der emissionsrelevanten Events werden dann die zugehörigen Fahrmanöver identifiziert und als emissionsrelevante Fahrmanöver mit den zugehörigen Parametern in der Manöverdatenbank 4 abgelegt.

Insbesondere können für jede Betriebsart bzw. jeden Geschwindigkeitsbereich, auch "speed bin" genannt (insbesondere Stadt, Landstraße/Überland, Autobahn) Manöver aufgrund eines Vorkonditionierens des EAS ("Preconditioning Maneuver Catalog") oder aufgrund von z.B. NOx-Emissionen ("NOx Worst Case Maneuver Catalog") festgelegt werden.

Für den "Preconditioning Maneuver Catalog" werden beispielsweise zurückgelegte Distanz, Fahrbahnneigung und SCR-Temperatur herangezogen. Dabei wird insbesondere ausgenutzt, dass die Fahrbahnneigung großen Einfluss auf die Temperatur der Abgasnachbehandlungskomponente hat. Derartige "Preconditioning Maneuver" können dabei unter Berücksichtigung eines Überhitzens, beispielsweise über 375°C bzw. 400°C, oder ein Unterkühlen, beispielsweise auf unter 225°C bzw. 200°C katalogisiert werden, wobei jeweils die Konvertierungseffizienz der Nachbehandlungskomponente in einen kritischen Zustand gebracht wird.

Für den "NOx Worst Case Maneuver Catalog" wird insbesondere die Pedalstellung bei relevanten NOx-Emissionen berücksichtigt, wobei jeweils hinsichtlich des Zeitpunkts auch die Fließdauer des strömenden Abgases, insbesondere vom Brennraum bis zu einem Sensor, berücksichtigt wird.

Für jede Betriebsart bzw. jedes "speed bin" lässt sich dann eine Reihung gemäß der Engine-Out NOx-Werte entsprechend der g/km NOx-Levels vornehmen. Derartige Fahrmanöver erzeugen also hohe Rohemissionen. Zusammen mit kritischem EAS-Zustand kann es dadurch zu kritischen Tailpipe-Emissionen kommen.

Vorzugsweise wird dann eine Transformation auf die "vehicle specific power" (VSP) vorgenommen, was eine Normierung der Parameterwerte und Manöver und damit Skalierung auf Zielfahrzeuge mit unterschiedlicher VSP zu einem späteren Zeitpunkt erlaubt, selbst wenn sich die Eigenschaften des Zielfahrzeugs von den Eigenschaften des Fahrzeugs, mit dem die der Datenbank zugrundeliegenden Testzyklen absolviert wurden, unterscheiden.

Dadurch ergibt sich eine normierte Manöverdatenbank 4', wie in Fig. 3 dargestellt. Für die Transformierung und Skalierung werden vorhandene Fahrzeug- und Motordaten herangezogen. Dabei kann es sich beispielsweise, aber nicht ausschließlich um folgende Fahrzeug- und Motordaten handeln: R0/R1/R2-Parameter, Fahrzeugmasse, Übersetzungsverhältnisse, Volllastdaten, usw.; die Fahrzeugmessungen und gefundenen Manöver werden also mittels Fahrzeug/Powertrain-Eigenschaften in VSP umgerechnet. Diese VSP-Verläufe werden in Abhängigkeit des zu testenden Zielfahrzeugs auf dieses Zielfahrzeug skaliert.

Anhand der identifizierten Fahrmanöver können dann die bestehenden bzw. auch neue Datenpools statistisch untersucht werden: Beispielsweise werden Häufigkeit und Verteilung der emissionsrelevanten Events bzw. Fahrmanöver ermittelt, es wird untersucht, welche Events/Fahrmanöver welcher RDE-Betriebsart bzw. "speed bin" in welcher Häufigkeit zugeordnet sind, wobei auch das Fahrerverhalten berücksichtigt werden kann. Auch sog. "orphans", also Events, denen kein konkreter Verursacher zugeordnet werden kann, werden ermittelt.

Fig. 3 zeigt eine Variante, bei der ausgehend von einer Manöverdatenbank 4 eine normierte Manöverdatenbank 4' auf einen neuen, insbesondere ebenfalls normierten, Datenpool bzw. Datensatz 3' angewandt wird, um Statistikinformationen 5 zu erhalten. Hierbei werden vorab definierte Fahrmanöver in dem Datensatz 3' erkannt und deren Auftreten statistisch ausgewertet.

Fig. 4 zeigt eine Ausführungsform, wo ausgehend von der Statistikinformation 5 wiederholt auf die Manöverdatenbank 4 bzw. normierte Manöverdatenbank 4' zugegriffen und eine Untersuchung des Datenpools 3, 3' vorgenommen wird. Durch diese Loop bzw. Rückkopplung von Information können die Informationen über emissionsrelevante Events und Manöver erweitert bzw. verbessert werden.

Zusammenfassend ist es möglich, Fahrzeugmanöver in der Manöverdatenbank 4 als Rohdaten abzulegen. Diese Rohdaten enthalten vorzugsweise die Betriebsdaten des jeweiligen Fahrzeugs während des Fahrmanövers sowie Daten über Eigenschaften des Fahrzeugs, welche es später ermöglichen, die Betriebsdaten zu normieren. Alternativ sind die Betriebsdaten in der Manöverdatenbank 4' vorzugsweise als bereits normierte Fahrmanöver abgelegt.

In beiden Fällen können die Betriebsdaten der Fahrmanöver, insbesondere Last und Drehzahl, als Prozentangabe in Bezug auf die Volllastkurven abgelegt sein. In diesem Fall können diese für einen Prüfling über dessen Volllastkurve wiederum in Absolutwerte transformiert oder skaliert werden.

Zusätzlich oder alternativ können die Fahrmanöver auch klassifiziert, beispielsweise nach einem Masse-Leistungs-Verhältnis der Prüflinge in der Manöverdatenbank 4, 4' abgelegt sein. Vorzugsweise können hierbei drei Klassen vorgesehen sein, insbesondere "niedrig", "mittel" und "hoch". Ein Prüfling kann dann einer dieser Klassen zugeordnet werden und nur solche Fahrzeugmanöver zum Erzeugen eines Prüflaufs für diesen Prüfling herangezogen werden, welche der entsprechenden Klasse entsprechen. Sind in dieser Klasse zu wenige Fahrmanöver vorhanden, können zusätzliche Fahrmanöver aus der benachbarten Klasse hinzugezogen werden. Zusätzlich werden die Fahrmanöver aus der dem Prüfling zugeordneten Klasse und/oder aus der Nachbarklasse vorzugsweise mittels der Eigenschaften des Prüflings transformiert. Durch die Klassifizierung ist hier aber im Allgemeinen nur noch eine vergleichsweise geringe Skalierung notwendig.

Auch bereits klassifizierte Fahrmanöver können wiederum sowohl als normierte Fahrmanöver wie auch als Fahrmanöver in absoluten Daten abgelegt sein. Im letzteren Fall werden diese vorzugsweise aus den normierten Fahrmanövern erzeugt, indem die Fahrmanöver mittels eines angenommenen virtuellen Prüflings, der im Wesentlichen vorzugsweise durchschnittliche Werte der Eigenschaften in der jeweiligen Klasse repräsentiert, transformiert bzw. skaliert werden.

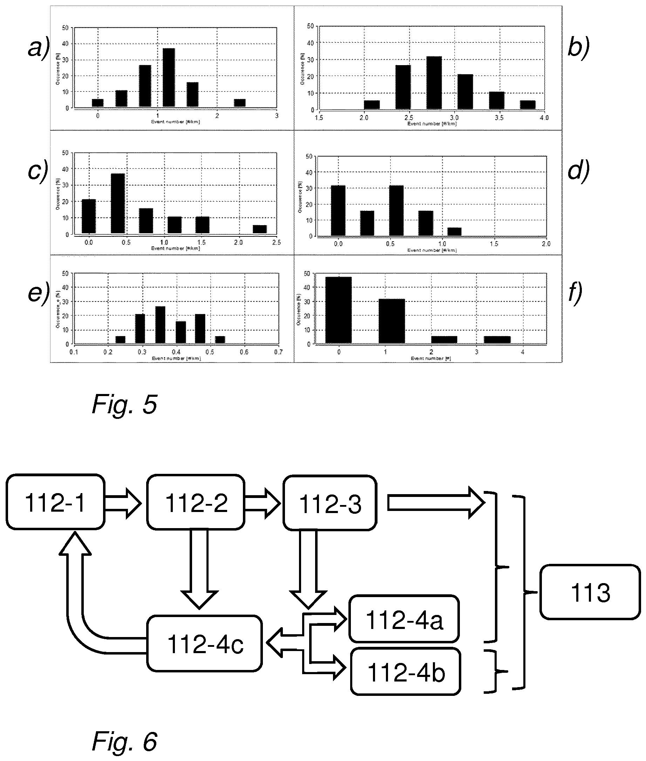

Beispielhafte Ergebnisse der statistischen Untersuchung von Fahrmanövern bei einem Otto-Motor sind in Fig. 5a-f dargestellt. Auf der x-Achse sind dabei die Anzahl der Events absolut bzw. pro Kilometer aufgetragen, auf der y-Achse die Häufigkeit in Prozent.

**Fig. 5a** zeigt die Häufigkeit von Ventilüberschneidungen bzw. "Scavenging". **Fig. 5b** zeigt die Häufigkeit von "Pedal Pumping". **Fig. 5c** zeigt die Häufigkeit plötzlicher Beschleunigungsvorgänge ("Sudden Acceleration"). **Fig. 5d** zeigt die Häufigkeit von Katalysatordurchschlägen ("Catalyst Breakthrough"). **Fig. 5e** zeigt die Häufigkeit der Aktivierung der Start/Stop-Funktionalität. **Fig. 5f** zeigt die Häufigkeit niedriger Katalysatortemperaturen ("Low Catalyst Temperature"), z.B. unter der Anspringtemperatur.

Diese statistischen Informationen können insbesondere auch dafür verwendet werden, bestehende Zyklen bzw. deren Messwerte darauf zu überprüfen, ob die emissionsrelevanten Ereignisse oder Fahrmanöver in einer relevanten Häufigkeit stattgefunden haben. Eine statistisch relevante Häufigkeit im Sinne einer Emissionsrobustheitsüberprüfung ist vorzugsweise an der oberen Häufigkeitsgrenze spezifischer emissionskritischer Manöverhäufigkeit einer zu Grunde gelegten statistischen Verteilung orientiert.

Im beschriebenen Ausführungsbeispiel wird das erfindungsgemäße Verfahren als Anwendung emissionsrelevanter Fahrmanöver auf einen Basiszyklus beschrieben, um einen maximal herausfordernden Prüflauf in Bezug auf Emissionen, einen sogenannten "worst case cycle", zu erhalten. Statt einem maximal herausfordernden Prüflauf kann aber auch ein lediglich definiert herausfordernder Prüflauf erzeugt werden. In diesem Fall werden definierte Kriterien zwischen maximaler und minimaler statistischer Häufigkeit von Manövern vorzugsweise in Kombination mit einem zu definierenden Wert zwischen maximalen und minimalen oder alternativ gezielt anders definierten Kriterien zur Zyklus-Gültigkeit variiert. Der Basiszyklus kann dabei in Schritt 111 grundsätzlich beliebig gewählt werden, vorzugsweise erfüllt er jedoch die gesetzlichen Regelungen - im gewählten Beispiel ist er also RDE-konform und/oder RDE-kriteriengültig.

Dabei können von einem Nutzer beliebige Emissions-relevante Manöver kombiniert werden, beispielsweise "preconditioning maneuver", die die Funktion des EAS beeinflussen, und beispielsweise "NOX emission maneuver", die direkt die Schadstoffemissionen beeinflussen. Der Nutzer kann dabei auswählen, ob und welche Betriebsarten bzw. "speed bins" beeinflusst werden sollen. Auch das Berücksichtigen des Fahrerverhaltens ist möglich, wobei z.B. auf die Eigenarten bzw. Kundenschicht des zu entwickelnden Fahrzeugs Rücksicht genommen werden kann. Die vom Nutzer gewählten Manöver werden dann in den Basiszyklus eingepasst.

**Fig. 6** zeigt ein Vorgehen für ein beispielhaftes Einpassen bzw. Einfügen beim Erzeugen eines Prüflaufs in Schritt 112 oder 303:

Nach der Identifikation von Emissions-relevanten Fahrmanövern 104 und/oder erfolgter Fahrmanöverauswahl in einem ersten Schritt 112-1 erfolgt eine Positionsermittlung in einem Schritt 112-2 für das Fahrmanöver unter Berücksichtigung kontinuierlicher Start- und Endpunkte innerhalb des Basiszyklus bzw. des vordefinierten Prüflaufs und einer Anordnung in der korrekten Betriebsart bzw. dem korrekten Geschwindigkeitsbereich "speed bin". Die Dauer, wie lange das Manöver erfolgt, wird vorzugsweise ebenfalls festgelegt.

Wenn die Positionsermittlung in Schritt 112-2 nicht erfolgreich ist, weil z.B. keine Position für das Fahrmanöver in dem vordefinierten Prüflauf gefunden werden kann, erfolgt eine erneute Fahrmanöverauswahl 112-4c.

Wenn die Positionsermittlung in Schritt 112-2 erfolgreich ist, wird in einem weiteren Schritt 112-3 überprüft, ob durch das eingepasste Manöver nach wie vor die gesetzlichen Regelungen erfüllt sind, ob der resultierende Zyklus also RDE-konform ist (z.B. aufgrund der verlängerten Dauer in einer Betriebsart) und/oder RDE-Zyklus-Gültigkeit aufweist. Falls diese Prüfung positiv verläuft und Konformität und/oder Gültigkeit gegeben ist, wird der auf diese Weise generierte Prüflauf in einem weiteren Schritt 113 ausgegeben, insbesondere als sogenannter "worst case cycle".

Falls die Prüfung in Schritt 112-3 negativ verläuft, kann entweder eine Glättung des Prüflaufs in Schritt 112-4a durchgeführt werden, vorzugsweise in Bereichen ohne besonders Emissions-relevante Ereignisse um diese herum, bis Zyklus-Gültigkeit und/oder Konformität gegeben ist aber auch durch andere Veränderungen am Manöver - beispielsweise das Verkürzen der Dauer des einzufügenden Manövers - oder seiner direkten Positionsumgebung. Auch Umweltbedingungen können, vorzugsweise im Bereich eines Emissions-relevanten Ereignisses, hierzu verändert werden. Beispielsweise kann ein Prüflauf, der durch Fahrmanövereinfügung mehr oder im Allgemeinen mit Fokus auf Emissionsherausforderungsmaximierung zuviele Stadtanteile aufweist, dadurch korrigiert werden, dass Stadtanteile an anderer Stelle entfernt und/oder durch Überlandfahrmanöver ersetzt werden, um eine Zyklus-gültige Verteilung zu erreichen. Alternativ wird trotz negativer Konformitätsprüfung auf Fortsetzung in Schritt 112-4b entschieden, so dass es bewusst zu einer Limitüberschreitung bzw. einem Nichtbestehen kommt. Als dritte Variante kann wieder eine erneute Fahrmanöverselektion 112-4c erfolgen.

Ergebnis ist dann ein um emissionsrelevante Fahrmanöver ergänzter Basiszyklus.

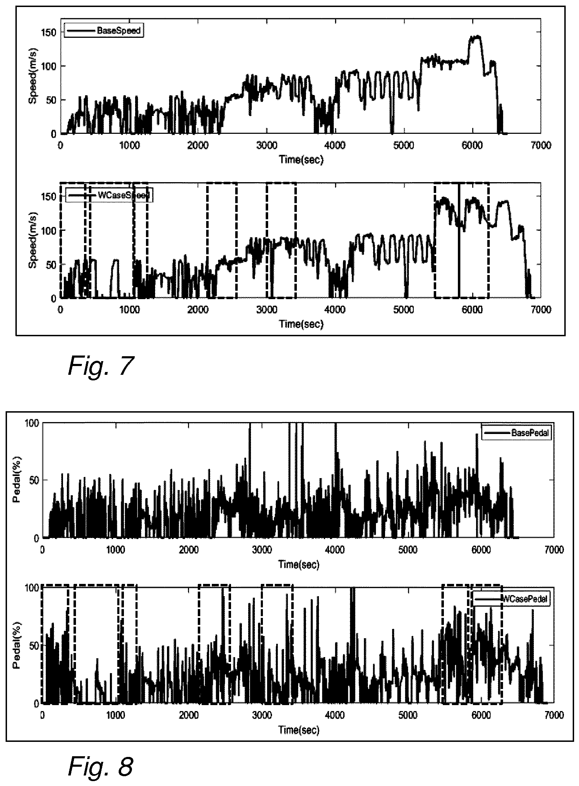

Die Fig. 7 bis 9 zeigen jeweils den Vergleich zwischen einem Basiszyklus (jeweils oberes Diagramm in den Fig. 7 bis 9) und einem gemäß dem erfindungsgemäßen Verfahren generierten Prüflauf, insbesondere einem sogenannten "worst case cycle" (jeweils unteres Diagramm in den Fig. 7 bis 9). Die im "worst case cycle" ergänzten Teile befinden sich jeweils in den strichliert dargestellten Kästen.

Nach Einsetzen der ausgewählten Fahrmanöver für die jeweilige Betriebsart bzw. "speed bin" (Stadt, Überland und Autobahn und/oder - ergänzend - Kaltstart) ergeben sich die dargestellten Abläufe.

Die Fig. 7 bis 9 zeigen insbesondere einen Zyklus, in dem beispielhaft die "worst cases", also die ergänzten emissionsrelevanten Events, mit dynamischen Fahrmanövern umgesetzt sind während glattere Manöver mit geringeren Fahrbahnneigungen während dem Vorkonditionieren zum Einsatz kommen, um beispielsweise ein Abkühlen der SCR-Komponenten zu bewirken.

**Fig. 7** zeigt den Geschwindigkeitsverlauf im Basiszyklus (oberes Diagramm) und im erfindungsgemäß generierten "worst case cycle" (unteres Diagramm).

**Fig. 8** zeigt die Pedalstellung ($\alpha$).

**Fig. 9** zeigt die Fahrbahnneigung bzw. den Gradienten.

**Fig. 12** zeigt ein System zum Erzeugen eines Prüflaufs, insbesondere eines Belastungsablaufs oder eines Geschwindigkeitsablaufs. Ein solches System umfasst vorzugsweise einen Computer und ist weiter vorzugsweise dazu eingerichtet, ein erfindungsgemäßes Verfahren 100 auszuführen.

Dieses System 10 weist vorzugsweise eine Schnittstelle, eingerichtet zum Ermitteln eines Datensatzes, welcher Betriebsdaten einer Vielzahl an Nutzungszyklen von Fahrzeugen aufweist, und zum Ausgeben des Prüflaufs des Fahrzeugs auf. Des Weiteren weist das System 10 vorzugsweise Mittel zum Normieren der Betriebsdaten der Nutzungszyklen, um verschiedene Nutzungszyklen und/oder verschiedene Fahrzeugtypen vergleichbar zu machen, auf. Vorzugsweise weist das System 10 des Weiteren Mittel 13 zum Prüfen, an welchen Stellen der Nutzungszyklen Emissions-relevante Ereignisse auftreten, auf. Des Weiteren vorzugsweise weist das System 10 Mittel 14 zum Zuordnen eines jeweils an diesen Stellen vorliegenden Fahrmanövers zwischen Emissions-relevanten Ereignissen auf. Des Weiteren weist das System 10 vorzugsweise Mittel 15 zum Erzeugen eines Prüflaufs des Fahrzeugs auf der Grundlage der zugeordneten Fahrzustände auf. Des Weiteren können die Mittel des Systems 10 oder weitere Mittel auch die weiteren Arbeitsschritte und Funktionen des Verfahrens zum Erzeugen eines Prüflaufs ausführen bzw. sind dazu eingerichtet.

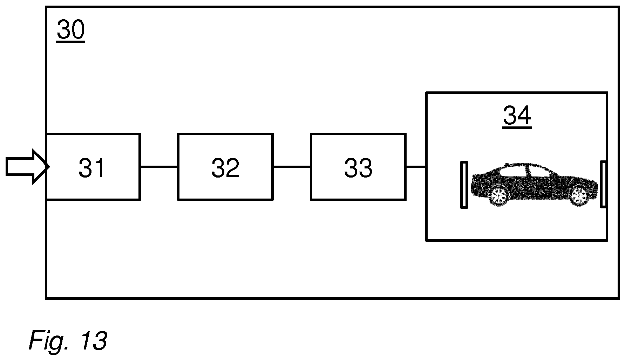

Anhand der **Fig. 13** wird ein System 30 zur Durchführung eines Prüflaufs eines Prüflings erläutert.

Das System 30 weist vorzugsweise Mittel 31 zum Ermitteln von Prüflingsparametern und Emissionswerten aus bereits durchgeführten Prüfläufen auf. Vorzugsweise weist das System 30 des Weiteren Mittel zum Definieren von Prüflingsmanövern, gekennzeichnet durch Prüflingsparameter, die im ursächlichen Zusammenhang mit über definierten Grenzwerten liegenden Emissionswerten liegen, auf. Vorzugsweise weist das System 30 des Weiteren Mittel zum Festlegen eines Prüflaufs unter zumindest teilweiser Verwendung der definierten Prüflingsmanöver auf. Vorzugsweise weist das System 30 des Weiteren einen Prüfstand 34 oder eine Simulationsumgebung 34 als Prüfumgebung zum Durchführen des Prüflaufs auf.

Die Prüfumgebung kann aber auch eine Straßen- bzw. vorzugsweise Testgeländemessung sein, bei welcher dem Fahrer Fahrmanöver automatisiert während dem Fahren als Vorschläge zur Kenntnis gebracht werden, die, sofern im Rahmen sicherer und erlaubter Fahrbedingungen umsetzbar, befolgt werden können um den erzeugten Prüflauf ganz oder in Ausschnitten nachzufahren.

Während weiter oben ein Vorgehen beschrieben wurde, bei dem ein Basiszyklus durch Einpassen von Fahrmanövern zu einem definiert fordernden Prüflauf, auch "worst case cycle", verändert wird, kann ein Ausführungsbeispiel des erfindungsgemäßen Verfahrens auch wie folgt ablaufen:

- Es erfolgt die Eingabe eines Basiszyklus, gekennzeichnet durch Geschwindigkeits- und Fahrbahnneigungs-/Gradientenprofil, und von Fahrzeugparametern (z.B. Leistung, Fahrzeugmasse);
- Anhand der vorab ermittelten bzw. generierten Manöverdatenbank bzw. deren statistischer Auswertung wird überprüft, ob der Basiszyklus bereits die hinsichtlich Emissionen für besonders relevant erachteten Fahrmanöver enthält;
- Falls die Fahrmanöver nicht ausreichend abgedeckt sind, werden anwenderspezifisch Fahrmanöver auf die oben beschriebene Weise implementiert, wobei permanent die Einhaltung der gesetzlichen Regelungen
- hier also RDE-Kriteriengültigkeit - geprüft werden;
- Es wird ein "worst case cycle" generiert und z.B. als Geschwindigkeits- und Gradientenprofil bzw. Fahrbahnsteigungsprofil ausgegeben; und
- Umsetzung des generierten Zyklus auf einem Motor-/Antriebsstrang-/virtuellen Prüfstand bzw. für einen realen PEMS-Fahrer.

Das erfindungsgemäße Verfahren erlaubt also sowohl das Überprüfen bestehender Zyklen auf RDE-Konformität als auch das Generieren neuer Prüfläufe aufbauend auf bestehenden Zyklen, die mit Emissions-relevanten Fahrmanövern ergänzt werden. Es wird darauf hingewiesen, dass es sich bei den exemplarischen Ausführungen lediglich um Ausführungsbeispiele handelt, die den Schutzbereich, die Anwendung und den Aufbau in keiner Weise einschränken sollen. Vielmehr wird dem Fachmann durch die vorausgehende Beschreibung ein Leitfaden für die Umsetzung von mindestens einem Ausführungsbeispiel gegeben, wobei diverse Änderungen, insbesondere im Hinblick auf die Funktion und Anordnung der beschriebenen Bestandteile, vorgenommen werden können, ohne den Schutzbereich zu verlassen, wie er sich aus den Ansprüchen ergibt.

**Patentansprüche**

1. Verfahren (100) zum Erzeugen eines Prüflaufs, insbesondere eines Belastungsablaufs und/oder eines Geschwindigkeitsablaufs, wobei sich der Prüflauf zum Nachbilden eines, insbesondere realen, Betriebs wenigstens eines Prüflings, wobei ein Prüfling ein Fahrzeug oder ein Antriebsstrangs oder eine Fahrzeugkomponente ist, eignet, folgende Arbeitsschritte aufweisend:

   Ermitteln (101) eines Datensatzes, welcher Betriebsdaten zumindest eines Nutzungszyklus eines Fahrzeugs oder einer Vielzahl an Nutzungszyklen von Fahrzeugen aufweist;
   Normieren (102) der Betriebsdaten des Nutzungszyklus oder der Nutzungszyklen, wobei beim Normieren Betriebsdaten zu spezifischen Betriebsdaten transformiert werden;
   Prüfen (103), an welchen Stellen des Nutzungszyklus oder der Nutzungszyklen Emissions-relevante Ereignisse auftreten;
   Zuordnen (104) eines jeweils an diesen Stellen vorliegenden Fahrmanövers zu den Emissions-relevanten Ereignissen;
   Erzeugen (112) des Prüflaufs auf der Grundlage der zugeordneten Fahrmanöver; und
   Ausgeben (113) des Prüflaufs.

2. Verfahren nach Anspruch 1, des Weiteren den folgenden Arbeitsschritt aufweisend:

   Klassifizieren (105) der Fahrmanöver nach der in dem jeweiligen Fahrmanöver aufgetretenen Emission, insbesondere einem Emissionsanstieg gegenüber einem vorher im Nutzungszyklus aufgetretenen Fahrmanöver, und/oder nach Geschwindigkeitsbins der Fahrzeuge während des jeweiligen Fahrzustands;
   wobei das Erzeugen des Prüflaufs auf der Grundlage des Klassifizierens erfolgt, wobei vorzugsweise Fahrmanöver, bei welchen eine relativ hohe Emission, insbesondere ein relativ hoher Emissionsanstieg, im Vergleich zu anderen Fahrmanövern auftritt, zum Erzeugen des Prüflaufs herangezogen werden.

3. Verfahren (100) zum Erzeugen eines Prüflaufs, insbesondere eines Belastungsablaufs und/oder eines Geschwindigkeitsablaufs, wobei sich der Prüflauf zum Nachbilden eines, insbesondere realen, Betriebs wenigstens eines Prüflings, wobei ein Prüfling ein Fahrzeug oder ein Antriebsstrangs oder eine Fahrzeugkomponente ist, eignet, folgende Arbeitsschritte aufweisend:

   Ermitteln (101) eines Datensatzes, welcher Betriebsdaten zumindest eines Nutzungszyklus eines Fahrzeugs oder einer Vielzahl an Nutzungszyklen von Fahrzeugen aufweist;
   Normieren (102) der Betriebsdaten des Nutzungszyklus oder der Nutzungszyklen, wobei beim Normieren Betriebsdaten zu spezifischen Betriebsdaten transformiert werden;

Prüfen (103) des Nutzungszyklus oder der Nutzungszyklen auf vordefinierte Fahrmanöver, welchen vorzugsweise Emissions-relevante Ereignissen zugeordnet sind;

Erzeugen (112) des Prüflaufs auf der Grundlage der Fahrmanöver, welchen Emissions-relevante Ereignisse zugeordnet sind; und

Ausgeben (113) des Prüflaufs.

4. Verfahren nach einem der vorhergehenden Ansprüche, des Weiteren den folgenden Arbeitsschritt aufweisend:

Auswerten (106) eines Auftretens der Fahrmanöver, insbesondere mittels statistischer Methoden; wobei eine Häufigkeit eines bestimmten Fahrmanövers in dem Prüflauf von einem Ergebnis des Auswertens abhängt, wobei vorzugsweise Fahrmanöver, welche im Vergleich zu anderen Fahrmanövern häufiger in den Nutzungszyklen auftreten, und/oder bei welchen eine höhere Emission im Vergleich zu anderen Fahrmanövern, insbesondere hoher Emissionsanstieg, auftritt, eine erhöhte Häufigkeit gegenüber den anderen Fahrmanövern in dem Prüflauf aufweisen.

5. Verfahren nach einem der vorhergehenden Ansprüche, des Weiteren folgenden Arbeitsschritt aufweisend:

Prüfen (107), an welchen Stellen der Nutzungszyklen Benutzer-Aktionen, insbesondere eine Betätigung eines Gaspedals, ein Gangwechsel, eine Kupplungsbetätigung und/oder eine Bremspedalbetätigung, auftreten; wobei solche Fahrmanöver wenigstens teilweise zum Erzeugen des Prüflaufs herangezogen werden, welche im Zusammenhang mit Benutzer-Aktionen stehen.

6. Verfahren (100) nach einem der vorhergehenden Ansprüche, des Weiteren folgenden Arbeitsschritt aufweisend:

Bereitstellen (111) eines vordefinierten Prüflaufs, welcher insbesondere auf einem realen Nutzungszyklus, insbesondere des spezifischen Prüflings oder des spezifischen Fahrzeugs, beruht; wobei beim Erzeugen des Prüflaufs der vordefinierte Prüflauf als Grundlage dient, welcher durch Einfügen von Fahrmanövern, die vorzugsweise Emissions-relevanten Ereignissen zugeordnet sind, angepasst wird; und/oder wobei beim Erzeugen des Prüflaufs der vordefinierte Prüflauf als Grundlage dient, welcher durch Verändern der Umgebung in dem vordefinierten Prüflauf, insbesondere einer Fahrbahnsteigung, einer Verkehrsbeeinträchtigung und/oder von Umweltbedingungen, angepasst wird.

7. Verfahren (100) nach einem der vorhergehenden Ansprüche, des Weiteren folgenden Arbeitsschritt aufweisend:

Filtern (108) des Datensatzes und/oder der Emissions-relevanten Ereignisse in Bezug auf eine vorbestimmte Hardwarekonfiguration und/oder Architektur und/oder das Leistungsgewicht der Fahrzeuge; wobei der Prüflauf wenigstens im Wesentlichen oder ausschließlich auf der Grundlage des gefilterten Datensatzes und/oder der gefilterten Emissions-relevanten Ereignisse erzeugt wird, so dass vorzugsweise Daten von Fahrzeugen, welche eine vorbestimmte Hardwarekonfiguration und/oder Architektur aufweisen, insbesondere eines spezifischen Prüflings und/oder eines spezifischen Fahrzeugs, berücksichtigt werden.

8. Verfahren (100) nach einem der vorhergehenden Ansprüche, des Weiteren folgenden Arbeitsschritt aufweisend:

Filtern (109) des Datensatzes und/oder der Emissions-relevanten Ereignisse in Bezug auf vorbestimmte Geschwindigkeitsbins; wobei beim Erzeugen des Prüflaufs jeweils Fahrmanöver aus einem zur jeweils vorliegenden Geschwindigkeit im Prüflauf passenden Geschwindigkeitsbin ausgewählt werden.

9. Verfahren (100) nach einem der vorhergehenden Ansprüche, wobei das Normieren ein Berechnen eines Ablaufs einer fahrzeugspezifischen Leistung (VSP) auf der Grundlage eines Geschwindigkeitsablaufs und/oder eines Belastungsablaufs eines jeweiligen Nutzungszyklus umfasst.

10. Verfahren nach (100) einem der vorhergehenden Ansprüche, wobei der Prüflauf des Weiteren als Ablauf einer fahrzeugspezifischen Leistung (VSP) erzeugt wird, wobei der Ablauf einer fahrzeugspezifischen Leistung (VSP) und/oder Segmente des Ablaufs einer fahrzeugspezifischen Leistung (VSP), welche jeweils Fahrmanövern entsprechen, unter Berücksichtigung der Eigenschaften eines spezifischen Prüflings und/oder eines spezifischen Fahrzeugs in den Prüflaufraum des spezifischen Fahrzeugs transformiert werden.

20

**11.** Verfahren (200) zum Testen eines Prüflings, die folgenden Arbeitsschritte aufweisend:

Bereitstellen (201) des Prüflings und/oder von Eigenschaften eines spezifischen Fahrzeugs, in dem der Prüfling angeordnet ist; und

Erzeugen (202) eines Prüflaufs auf der Grundlage von normierten Fahrmanövern, welche vorzugsweise Emissions-relevanten Ereignissen entsprechen, insbesondere mittels eines Verfahrens nach einem der vorhergehenden Ansprüche, wobei bei normierten Fahrmanövern Betriebsdaten zu spezifischen Betriebsdaten transformiert wurden; und

Durchführen (203) des Prüflaufs mit dem Prüfling.

**12.** Verfahren nach Anspruch 11, wobei beim Erzeugen des Prüflaufs die normierten Fahrmanöver oder normierten Betriebsdaten der Fahrmanöver auf den Prüfling oder ein spezifisches Fahrzeug, in dem der Prüfling angeordnet ist, skaliert werden.

**13.** Verfahren nach Anspruch 11 oder 12, wobei beim Erzeugen des Prüflaufs, insbesondere Einfügen von Emissions-relevanten Fahrmanövern, Verändern eines vordefinierten Prüflaufs oder Zusammensetzen des Prüflaufs, vordefinierte Kriterien, vorzugsweise gesetzliche Vorgaben, vorzugsweise eine RDE-Zyklus-Gültigkeit und/oder eine RDE-Konformität, bei einer Auswahl der Art von Fahrmanövern und/oder einer Priorisierung von Fahrmanövern untereinander und/oder einer Anzahl jeweiliger Fahrmanöver berücksichtigt werden.

**Claims**

**1.** Method (100) for generating a test run, in particular a load run and/or a speed run, the test run being suitable for simulating a, in particular real, operation of at least one test specimen, a test specimen being a vehicle or a drive train or a vehicle component, having the following working steps:

Determining (101) a data set comprising operational data of at least one usage cycle of a vehicle or a plurality of usage cycles of vehicles;

Normalizing (102) the operational data of the cycle or cycles of use, wherein normalizing transforms operational data to specific operational data;

Check (103) at which points in the usage cycle or cycles emission-relevant events occur;

Assigning (104) a driving maneuver present at each of these locations to the emission-relevant events;

Generating (112) the test run based on the associated driving maneuvers; and

Output (113) of the test run.

**2.** The method of claim 1, further comprising the following step:

Classifying (105) the driving maneuvers according to the emission that occurred in the respective driving maneuver, in particular an emission increase compared to a driving maneuver that occurred previously in the usage cycle, and/or according to speed bins of the vehicles during the respective driving condition;

the test run being generated on the basis of the classification, preferably driving maneuvers in which a relatively high emission, in particular a relatively high emission increase, occurs in comparison with other driving maneuvers being used to generate the test run.

**3.** Method (100) for generating a test run, in particular a load run and/or a speed run, the test run being suitable for simulating a, in particular real, operation of at least one test specimen, a test specimen being a vehicle or a drive train or a vehicle component, having the following working steps:

Determining (101) a data set comprising operational data of at least one usage cycle of a vehicle or a plurality of usage cycles of vehicles;

Normalizing (102) the operational data of the usage cycle or cycles, wherein normalizing transforms operational data to specific operational data;

Checking (103) the usage cycle or cycles for predefined driving maneuvers, to which emission-relevant events are preferably assigned;

Generating (112) the test run based on the driving maneuvers to which emission-related events are assigned; and

Output (113) of the test run.

4. A method according to any one of the preceding claims, further comprising the following step:

Evaluating (106) an occurrence of the driving maneuvers, in particular by means of statistical methods; wherein a frequency of a particular driving maneuver in the test run depends on a result of the evaluation, wherein preferably driving maneuvers which occur more frequently in the cycles of use compared to other driving maneuvers, and/or in which a higher emission occurs compared to other driving maneuvers, in particular high emission increase, have an increased frequency compared to the other driving maneuvers in the test run.

5. A method according to any one of the preceding claims, further comprising the following step:

Checking (107) at which points in the usage cycles user actions occur, in particular an accelerator pedal actuation, a gear change, a clutch actuation and/or a brake pedal actuation; wherein such driving maneuvers are at least partially used for generating the test run which are related to user actions.

6. A method (100) according to any one of the preceding claims, further comprising the following step:

Providing (111) a predefined test run, which is based in particular on a real usage cycle, in particular of the specific test item or the specific vehicle; wherein, when generating the test run, the predefined test run serves as a basis, which is adapted by inserting driving maneuvers that are preferably assigned to emission-relevant events; and/or wherein, when generating the test run, the predefined test run serves as a basis, which is adapted by changing the environment in the predefined test run, in particular a road gradient, a traffic obstruction and/or environmental conditions.

7. A method (100) according to any one of the preceding claims, further comprising the following step:

Filtering (108) the data set and/or emission-related events with respect to a predetermined hardware configuration and/or architecture and/or vehicle power-to-weight ratio; wherein the test run is generated at least substantially or exclusively on the basis of the filtered data set and/or the filtered emission-relevant events, so that preferably data of vehicles having a predetermined hardware configuration and/or architecture, in particular of a specific test specimen and/or a specific vehicle, are taken into account.

8. A method (100) according to any one of the preceding claims, further comprising the following step:

Filtering (109) the data set and/or emission-relevant events with respect to predetermined velocity bins; where, when the test run is generated, driving maneuvers are selected from a speed bin that matches the respective speed in the test run.

9. The method (100) according to any one of the preceding claims, wherein normalizing comprises calculating a sequence of a vehicle specific performance (VSP) based on a speed sequence and/or a load sequence of a respective usage cycle.

10. The method according to (100) any one of the preceding claims, wherein the test run is further generated as a sequence of a vehicle-specific performance (VSP), wherein the sequence of a vehicle-specific performance (VSP) and/or segments of the sequence of a vehicle-specific performance (VSP), each corresponding to driving maneuvers, are transformed into the test run space of the specific vehicle taking into account the characteristics of a specific test specimen and/or a specific vehicle.

11. A method (200) for testing a test specimen, comprising the following steps:

Providing (201) the DUT and/or characteristics of a specific vehicle in which the DUT is placed; and generating (202) a test run on the basis of normalized driving maneuvers which preferably correspond to emission-relevant events, in particular by means of a method according to one of the preceding claims, wherein in the case of normalized driving maneuvers operating data have been transformed into specific operating data; and Perform (203) the test run with the test specimen.

**12.** The method of claim 11, wherein in generating the test run, the normalized driving maneuvers or normalized operating data of the driving maneuvers are scaled to the DUT or a specific vehicle in which the DUT is located.

**13.** Method according to claim 11 or 12, wherein, when generating the test run, in particular inserting emission-relevant driving maneuvers, changing a predefined test run or composing the test run, predefined criteria, preferably legal requirements, preferably an RDE cycle validity and/or an RDE conformity, are taken into account in a selection of the type of driving maneuvers and/or a prioritization of driving maneuvers among each other and/or a number of respective driving maneuvers.

**Revendications**

**1.** Procédé (100) de génération d'un cycle d'essai, en particulier d'un cours de contrainte et/ou d'un cours de vitesse, dans lequel le cycle d'essai est adapté pour reproduire un fonctionnement, en particulier réel, d'au moins un spécimen, dans lequel un spécimen est un véhicule ou une chaîne cinématique ou un composant de véhicule, présentant des étapes de travail suivantes :

de détermination (101) d'un jeu de données, lequel présente des données de fonctionnement d'au moins un cycle d'utilisation d'un véhicule ou d'une pluralité de cycles d'utilisation de véhicules ;
de normalisation (102) des données de fonctionnement du cycle d'utilisation ou des cycles d'utilisation, dans lequel des données de fonctionnement sont transformées lors de la normalisation en des données de fonctionnement spécifiques ;
d'examen (103) des moments du cycle d'utilisation ou des cycles d'utilisation, auxquels des événements significatifs en matière d'émissions se produisent ;
d'association (104) d'une manoeuvre présente respectivement à ces moments aux événements significatifs en matière d'émissions ;
de génération (112) du cycle d'essai sur la base des manoeuvres associées ; et
d'émission (113) du cycle d'essai.

**2.** Procédé selon la revendication 1, présentant par ailleurs l'étape de travail suivante :

la classification (105) des manoeuvres d'après les émissions produites lors de la manoeuvre respective, en particulier une augmentation des émissions par rapport à une manoeuvre survenue précédemment au cours du cycle d'utilisation et/ou selon des plages de vitesses des véhicules pendant l'état de conduite respectif ;
dans lequel la génération du cycle d'essai s'effectue sur la base de la classification, dans lequel de préférence des manoeuvres, lors desquelles des émissions relativement élevées, en particulier une augmentation relativement élevée des émissions, se produisent en comparaison avec d'autres manoeuvres, sont prises en compte pour générer le cycle d'essai.

**3.** Procédé (100) de génération d'un cycle d'essai, en particulier d'une procédure de contrainte et/ou d'une procédure de vitesse, dans lequel le cycle d'essai est adapté pour reproduire un fonctionnement, en particulier réel, d'au moins un spécimen, dans lequel un spécimen est un véhicule ou une chaîne cinématique ou un composant de véhicule, présentant des étapes de travail suivantes :

de détermination (101) d'un jeu de données, lequel présente des données de fonctionnement d'au moins un cycle d'utilisation d'un véhicule ou d'une pluralité de cycles d'utilisation de véhicules ;
de normalisation (102) des données de fonctionnement du cycle d'utilisation ou des cycles d'utilisation, dans lequel des données de fonctionnement sont transformées lors de la normalisation en des données de fonctionnement spécifiques ;
d'examen (103) de manoeuvres prédéfinies du cycle d'utilisation ou des cycles d'utilisation, auxquelles sont associés de préférence des événements significatifs en matière d'émissions ;
de génération (112) du cycle d'essai sur la base des manoeuvres, auxquelles des événements significatifs en matière d'émissions sont associés ; et
d'émission (113) du cycle d'essai.

**4.** Procédé selon l'une quelconque des revendications précédentes, présentant par ailleurs l'étape de travail suivante :

l'analyse (106) d'une apparition des manoeuvres, en particulier au moyen de méthodes statistiques ;

dans lequel une fréquence d'une manoeuvre définie dans le cycle d'essai dépend d'un résultat de l'analyse, dans lequel de préférence des manoeuvres, qui se produisent plus fréquemment dans les cycles d'utilisation en comparaison avec d'autres manoeuvres et/ou pour lesquelles des émissions plus élevées en comparaison avec d'autres manoeuvres, en particulier une augmentation élevée des émissions, apparaissent, présentent une fréquence plus élevée par rapport aux autres manoeuvres dans le cycle d'essai.

5.  Procédé selon l'une quelconque des revendications précédentes, présentant par ailleurs l'étape de travail suivante :

l'examen (107) des moments des cycles d'utilisation, auxquels des actions d'utilisateur, en particulier un actionnement d'une pédale d'accélérateur, un changement de rapport, un actionnement d'embrayage et/ou un actionnement de pédale de frein, se produisent ;
dans lequel des manoeuvres de ce type, lesquelles sont en lien avec des actions d'utilisateur, sont prises en compte au moins en partie pour générer le cycle d'essai.

6.  Procédé (100) selon l'une quelconque des revendications précédentes, présentant par ailleurs l'étape de travail suivante :

la mise à disposition (111) d'un cycle d'essai prédéfini, lequel se base en particulier sur un cycle d'utilisation réel, en particulier du spécimen spécifique ou du véhicule spécifique ;
dans lequel, lors de la génération du cycle d'essai, le cycle d'essai prédéfini sert de base, lequel est adapté par l'intégration de manoeuvres, qui sont associées de préférence à des événements significatifs en matière d'émissions ; et/ou
dans lequel lors de la génération du cycle d'essai, le cycle d'essai prédéfini sert de base, lequel est adapté en modifiant l'environnement dans le cycle d'essai prédéfini, en particulier une pente de voie de circulation, une altération du trafic et/ou des conditions environnementales.

7.  Procédé (100) selon l'une quelconque des revendications précédentes, présentant par ailleurs l'étape de travail suivante :

le filtrage (108) du jeu de données et/ou des événements significatifs en matière d'émissions en ce qui concerne une configuration matérielle et/ou une architecture prédéfinies et/ou le rapport puissance/poids des véhicules ;
dans lequel le cycle d'essai est généré au moins sensiblement ou exclusivement sur la base du jeu de données filtré et/ou des événements significatifs en matière d'émissions filtrés de sorte que de préférence des données de véhicules, qui présentent une configuration matérielle et/ou une architecture prédéfinies, en particulier d'un spécimen spécifique et/ou d'un véhicule spécifique, sont prises en compte.

8.  Procédé (100) selon l'une quelconque des revendications précédentes, présentant par ailleurs l'étape de travail suivante :

le filtrage (109) du jeu de données et/ou des événements significatifs en matière d'émissions en ce qui concerne des plages de vitesses prédéfinies ;
dans lequel, lors de la génération du cycle d'essai, des manoeuvres sont sélectionnées respectivement parmi une plage de vitesses adaptée à la vitesse respectivement présente.

9.  Procédé (100) selon l'une quelconque des revendications précédentes, dans lequel la normalisation comprend un calcul d'un cours d'une puissance spécifique au véhicule (VSP) sur la base d'un cours de vitesse et/ou d'un cours de contrainte d'un cycle d'utilisation respectif.

10. Procédé (100) selon l'une quelconque des revendications précédentes, dans lequel le cycle d'essai est en outre généré en tant que cours d'une puissance spécifique au véhicule (VSP), dans lequel le cours d'une puissance spécifique au véhicule (VSP) et/ou des segments du cours d'une puissance spécifique au véhicule (VSP), qui correspondent respectivement à des manoeuvres, sont transformés dans la salle d'essai du véhicule spécifique en tenant compte des propriétés d'un spécimen spécifique et/ou d'un véhicule spécifique.

11. Procédé (200) pour tester un spécimen, présentant les étapes suivantes :

de mise à disposition (201) du spécimen et/ou de caractéristiques d'un véhicule spécifique, dans lequel le spécimen est disposé ; et

de génération (202) d'un cycle d'essai sur la base de manoeuvres normalisées, qui correspondent de préférence à des événements significatifs en matière d'émissions, en particulier au moyen d'un procédé selon l'une quelconque des revendications précédentes, dans lequel, lors de manoeuvres normalisées, des données de fonctionnement ont été transformées en données de fonctionnement spécifiques ; et de mise en oeuvre (203) du cycle d'essai avec le spécimen.

12. Procédé selon la revendication 11, dans lequel, lors de la génération du cycle d'essai, les manoeuvres normalisées ou les données de fonctionnement normalisées des manoeuvres sont modulées sur le spécimen ou sur un véhicule spécifique dans lequel le spécimen est disposé.

13. Procédé selon la revendication 11 ou 12, dans lequel, lors de la génération du cycle d'essai, en particulier lors de l'intégration de manoeuvres significatives en matière d'émissions, la modification d'un cycle d'essai prédéfini ou la composition du cycle d'essai, des critères prédéfinis, de préférence des prescriptions légales, de préférence une validité du cycle RDE et/ou une conformité RDE sont pris en compte lors d'une sélection du type de manoeuvres et/ou d'une priorisation de manoeuvres entre elles et/ou d'un nombre de manoeuvres respectives.

**100**

| | Fahr-<br>manöver | Geschw.-<br>Bin [km/h] | Emission |
|---|---|---|---|
| A) | | 80- 100 | sehr<br>hoch |
| B) | | 50- 80 | hoch |
| C) | | 20- 50 | mittel |

**105**

*Fig. 1a*

**100**

106

107

108

109

110

111

113

112

*Fig. 1b*

Fig. 2

Fig. 3

Fig. 4

Fig. 5

Fig. 6

Fig. 7

Fig. 8

Fig. 9

Fig. 10

Fig. 11

Fig. 12

*Fig. 13*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1672348 A1
- DE 102017107271 A1

- WO 2017080999 A1